(19) Europäisches Patentamt / European Patent Office / Office européen des brevets

(11) **EP 3 189 310 B1**

(12) **EUROPEAN PATENT SPECIFICATION**

(45) Date of publication and mention of the grant of the patent:
**03.10.2018 Bulletin 2018/40**

(21) Application number: **15760038.8**

(22) Date of filing: **28.08.2015**

(51) Int Cl.:
**G01D 21/00** $^{(2006.01)}$

(86) International application number:
**PCT/US2015/047546**

(87) International publication number:
**WO 2016/036612 (10.03.2016 Gazette 2016/10)**

(54) **SYSTEM AND METHOD FOR SENSOR NODE LOCALIZATION AND SENSOR NETWORK ORGANIZATION BASED ON CONTEXTUAL EVENT DETECTION**

SYSTEM UND VERFAHREN ZUR SENSORKNOTENLOKALISIERUNG UND SENSORNETZWERKORGANISATION AUF BASIS DER DETEKTION KONTEXTUELLER EREIGNISSE

SYSTÈME ET PROCÉDÉ D'ORGANISATION DE LOCALISATION D'UN NOEUD DE CAPTEURS ET D'ORGANISATION D'UN RÉSEAU DE CAPTEURS D'APRÈS UNE DÉTECTION D'ÉVÉNEMENT CONTEXTUEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2014 US 201462045986 P**
**04.02.2015 US 201562111745 P**
**24.04.2015 US 201562152510 P**
**24.04.2015 US 201562152318 P**

(43) Date of publication of application:
**12.07.2017 Bulletin 2017/28**

(73) Proprietor: **PCMS Holdings, Inc.**
**Wilmington, DE 19809 (US)**

(72) Inventor: **OJALA, Pasi Sakari**
**FIN-02400 Kirkkonummi (FI)**

(74) Representative: **Heinze, Ekkehard**
**Meissner Bolte Patentanwälte**
**Rechtsanwälte Partnerschaft mbB**
**Widenmayerstraße 47**
**80538 München (DE)**

(56) References cited:
**US-A1- 2007 230 269**

• **YOUNGHWA LEE ET AL: "A Light-weight and Scalable Localization Technique Using Mobile Acoustic Source", THE SIXTH IEEE INTERNATIONAL CONFERENCE ON COMPUTERAND INFORMATION TECHNOLOGY CIT 2006, 20 September 2006 (2006-09-20), - 22 September 2006 (2006-09-22), pages 235-240, XP055223603, Piscataway, NJ DOI: 10.1109/CIT.2006.10 ISBN: 0-7695-2687-X**
• **KUSHWAHA M ET AL: "Sensor node localization using mobile acoustic beacons", MOBILE ADHOC AND SENSOR SYSTEMS CONFERENCE, 2005. IEEE INTERNATIONAL C ONFERENCE ON NOV. 7, 2005, PISCATAWAY, NJ, USA,IEEE, 7 November 2005 (2005-11-07), pages 483-491, XP010858906, DOI: 10.1109/MAHSS.2005.1542835 ISBN: 978-0-7803-9465-0**

## Description

### CLAIM OF PRIORITY AND RELATED APPLICATIONS

This application claims priority of U.S. Provisional Application No. 62/045,986 filed on September 4, 2014. This application also claims priority of U.S. Provisional Application No. 62/111,745 filed on February 4, 2015. This application also claims priority of U.S. Provisional Application No. 62/152,510 filed on April 24, 2015. This application also claims priority of U.S. Provisional Application No. 62/152,318 filed on April 24, 2015.

The following documents are cited:

[1] RFC 2501 Mobile Ad hoc Networking (MANET): Routing Protocol Performance Issues and Evaluation Considerations.

[2] RFC 3626 Optimized Link State Routing Protocol (OLSR).

[3] Candès, Emmanuel J.; Wakin, Michael B. "An Introduction To Compressive Sampling, A sensing/sampling paradigm that goes against the common knowledge in data acquisition" IEEE Signal Processing Magazine, March 2008.

[4] Blu, Thierry; Dragotti, Pier-Luigi; Vetterli, Martin; Marziliano, Pina; Coulot, Lionel. "Sparse Sampling of Signal Innovations, Theory, algorithms, and performance bounds" IEEE Signal Processing Magazine, March 2008.

## BACKGROUND

Sensor networks or machine-to-machine (M2M) networks may include a plurality of devices capable of capturing environmental information, detecting events, conducting measurement tasks and reporting the results to network gateway, servers and databases. The devices, or sensor nodes, typically include at least one sensor of physical events, a processor, memory, and a communications interface to communicate with other sensors or with data network components such as a server. Typically, sensor nodes have more than one sensor and each sensor is capable of sensing a different modality, such as for example, sound, light, acceleration, sound pressure, etc. Sensors in groups of sensor nodes may be tasked in groups to handle different sensing tasks based on modality. Allocating sensing tasks to groups of sensor nodes provides redundant measurements and allows for the detection of patterns in the physical events measured by the sensors.

One problem with managing a sensor network, particularly as the size of the sensor network increases, is ensuring that sensing tasks are allocated optimally. Having several network nodes allocated to the same measurement task may waste expensive battery, wireless transmission bandwidth and computational resources of the network. The use of network and sensor resources may not be optimal if the nodes are close to each other and are measuring the same target, or when the nodes are not even reaching the point of interest to be measured.

Sensor networks often evolve in size and complexity by addition or removal of new sensor nodes. Connecting a new sensor node to an existing sensor network, M2M service or application within a network may be problematic without accurate location information of the new device with respect to the existing network. Ensuring that the nodes of the existing network are within the desired location and within range of a point of interest is also challenging. This can especially be the case when the devices are supposed to share computation, sensing or any other task within the service in a predefined location. An accurate knowledge about the location relative to other connected devices of the existing service is useful.

In existing sensor networks, an M2M service or application within the network may broadcast information about the existence of connectivity and services within the range, but there may be a need to be connected to a subset of devices. Especially when the device is supposed to share a predefined task within the network, the connecting device should be aware of its relative position with respect to the predefined subset of the network. In this way, the node can be grouped with other relevant members of the network. However, the location information of the network, the new device or both may not be available or may not be accurate enough, particularly in indoor conditions.

Neighbor discovery in a wireless mobile sensor network is often based on the availability of a communication channel. In such networks, a neighbor is defined based on the transmission channel capabilities. However, the mere existence of a communication channel is not necessarily a sufficient condition for defining a neighbor when considering sensor network tasks of detecting the environment and physical events in the measurement range. This especially true in situations involving centralized, infrastructure-based networks, for example in cellular networks, when the connectivity neighborhood of the nodes, could be global in scale.

Accurate location estimation is needed for many location-based services, especially in indoor environments. For example, navigation in shopping malls is still a challenge. Furthermore, localizing portable equipment and tools (for example in a hospital or an industrial plant) is an important contribution to operational efficiency and cost management. For example, a hospital may not need to acquire extra devices when the whereabouts of the existing ones are constantly known.

Wireless sensor networks (WSN) consist of a plurality of independent mobile devices connected to each other. In an example embodiment, the WSN may be organized according to the mobile ad-hoc network (MANET) protocol. A WSN is capable of capturing environmental information, detecting events, conducting measurement tasks and reporting the results within the network towards dedicated application interfaces as well as service databases. The captured information can be analyzed for classifying and organizing the network itself. The self-organization is typically conducted for the given task and to get reliable results using redundant measurements.

An individual sensor node of a wireless sensor network has little opportunity to gain knowledge about the overall conditions within the surrounding environment. Therefore, the node does not have the means to optimize the performance in response to the network operation or the environment. Typically, the main task of a node is to capture data from the environment with the given sensing capabilities and to broadcast the results over the network to the network application interface or database. The node does not necessarily know whether other nodes are co-located and whether they are actually measuring the same event. Neither does the node have any knowledge about the overall network capabilities, performance, condition and distribution of the available modalities within the coverage of the network. WSNs do not necessarily have a centralized infrastructure to manage the network and allocate resources based on known capabilities of each node.

WSNs can waste resources when all the sensor nodes are measuring the same physical event and transmitting the information over the network towards the database. Each sensor node may communicate over the network, for example, according to standard protocols. In an example embodiment, sensor nodes communicate according to the Optimized Link State Routing (OLSR) Protocol. Hence, each node conducting a measurement task increases the transmission bandwidth requirements since it is simultaneously acting as a receiver and transmitter for the data captured by the other nodes.

Sensor faults in sensor networks or M2M services can cause problems in industrial applications. In case measurements from feedback loops applying sensors and sensor networks are not accurate and reliable, the processes perform poorly, sub optimally and may even become unstable. The same problem arises when sensor network readings are not synchronized. Sensor faults cause losses, disturbances, delays and profit losses. Therefore, it is crucial to be able to monitor the integrity of the system and detect sensor faults as soon as possible. However, sensor faults, as such, are difficult to monitor since changes in monitored values may also be caused by the process itself.

Lee et al., A Light-weight and Scalable Localization Technique Using Mobile Acoustic Source, PROCEEDINGS OF THE SIXTH IEEE INTERNATIONAL CONFERENCE ON COMPUTER AND INFORMATION TECHNOLOGY (CIT '06) 235-240 (2006) and Kushwaha, et al., Sensor Node Localization Using Mobile Acoustic Beacons, MOBILE ADHOC AND SENSOR SYSTEMS CONFERENCE 483-491 (Nov. 7, 2005) disclose systems for determining sensor location by measuring the travel time of acoustic signals. Khalid, Muhammad, et al., Gunshot Detection and Localization Using Sensor Networks, PROCEEDINGS OF THE IEEE INTERNATIONAL CONFERENCE ON SMART INSTRUMENTATION, MEASUREMENT AND APPLICATIONS (ICSIMA) 1-6 (Nov. 26-27, 2013) discloses a system that uses the time difference of arrival of shock wave and muzzle blast to estimate a shooter's location.

There is a need in the art for systems and methods of configuring, managing, and monitoring sensor networks that automatically detect a new device within a sensor network range, enable a new device or a sensor to connect to the existing network, automatically classify and organize devices measuring one or more targets, enable node self-discovery and self-organization of ad hoc networks, and detect and address sensor faults.

**SUMMARY**

In view of the above, methods and systems are described for locating, organizing, and monitoring sensor nodes in a sensor node network.
The scope of the invention is defined by the appended claims. In an example method, a sensor node network manager receives a first environmental measurement from a first sensor node and a second environmental measurement from a second sensor node. The first and second environmental measurements are compared to determine if the first and second sensor nodes detected a common event. If a common event was detected by both sensor nodes, the first and second sensor nodes may be deemed to be co-located, or contextually related, or contextually similar.

Sensor nodes that are contextually related may be grouped and monitored as a contextually related group. Sensors of different modalities on the sensor nodes may be assigned sensing tasks based on contextual similarities. Sensing tasks may be assigned in a manner that optimizes the use of the resources available from the sensor nodes, without sacrificing a desired level of redundancy. Sensor nodes that are co-located or contextually related may also provide information about a contextual similarity field that may be defined by a given group of contextually related sensor nodes.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

**BRIEF DESCRIPTION OF THE DRAWINGS**

A more detailed understanding may be had from the following description, presented by way of example in conjunction with the accompanying drawings, which are first briefly described below.

FIG. 1A is a schematic diagram illustrating the connection of a sensor node and existing sensor node network detecting the same physical event x(t).

FIG. 1B is a flowchart illustrating operation of a method for determining if a connecting sensor node is contextually related to at least one sensor node in a sensor node network.

FIG. 2 illustrates an example of the pre-processing of a sensor signal including a high-pass filtering that transforms the sensed event in sparse domain.

FIG. 3 illustrates an example of a threshold function with value X for a high-pass filtered signal.

FIG. 4 illustrates an example of the processing of a sparse domain signal with a complex transform matrix, after which the signal is subsampled and forwarded to a transmission channel.

FIG. 5 illustrates an example of compressed sampling in the transform domain.

FIG. 6 illustrates an example implementation in which a M2M gateway receives the low sampling rate message and reconstructs the time domain sparse signal.

FIG. 7 illustrates an example process of receiving sparse signals and reconstructing the sparse signals to perform a similarity measurement.

FIG. 8 is a flowchart illustrating an example of sensor signal event capture.

FIG. 9 is a flowchart illustrating an example of sparse sensor signal event reconstruction.

FIG. 10 is a flowchart illustrating an example of sensor signal similarity measurement.

FIG. 11 is a schematic diagram of a sensor network organized in two overlapping subgroups.

FIG. 12 is a flowchart illustrating an example of a sensor node allocation process based on context similarity.

FIG. 13 is a schematic diagram of a sensor node network comprising a group of sensors observing the same physical event within the range of the network.

FIG. 14 is a schematic diagram illustrating an example of a grouping of connected sensors based on context similarity and mapping the groups together.

FIG. 15 is a schematic diagram illustrating sensor nodes being added or removed from a sensing task based on a contextual similarity.

FIG. 16 is a flowchart illustrating another example of a sensor node allocation process based on contextual similarity.

FIG. 17 is a schematic diagram illustrating a sensor network in which contextual analysis requests are forwarded step by step according to an embodiment.

FIG. 18 is a flowchart illustrating operation of an example method for propagating context similarity request through a sensor node network.

FIG. 19 is a message flow diagram illustrating an example message flow of similarity requests and reply messages through a sensor node network.

FIG. 20 is a schematic diagram of an example derivation of a network topology and contextual field.

FIG. 21 is a schematic diagram illustrating an example of a contextual analysis path continuing where contextual similarity is not detected.

FIG. 22 is a schematic diagram illustrating an example of a construction of a network topology based on obtaining knowledge of neighboring sensor nodes.

FIG. 23 is a schematic graph illustrating a number of received reports over time.

FIG. 24 is a schematic graph illustrating a number of "no similarity" reports when the search is reaching the edges of the field.

FIG. 25 is a schematic diagram illustrating an example of a sensor node network in which a faulty primary sensor is detected.

FIG. 26 is a flowchart illustrating operation of an example of a method for detecting a faulty sensor node in a sensor node network.

FIG. 27 is a flowchart of an example method for detecting a faulty sensor node having a high sensitivity sensor with a high sampling rate.

FIG. 28 is a flowchart illustrating operation of an example method for including detection of temporal deviation in comparing sensor node signals.

FIG. 29 is a flowchart illustrating operation of an example method for including temporal alignment in detecting defective sensors.

FIG. 30 is a block diagram of an example of a wireless transmit/receive unit that may be used in example implementations.

**DETAILED DESCRIPTION**

A detailed description of illustrative embodiments will now be provided with reference to the various Figures. Although this description provides detailed examples of possible implementations, it should be noted that the provided details are intended to be by way of example and in no way limit the scope of the application.

**I. Sensor Node Co-Location**

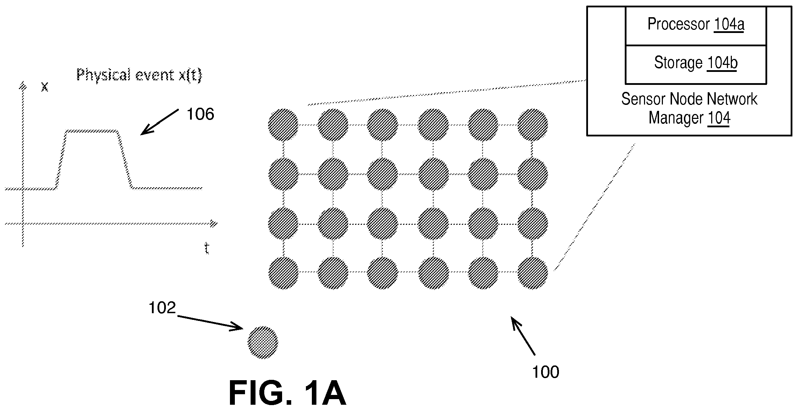

FIG. 1A is a schematic diagram illustrating the connection of a sensor node 102 and existing sensor node network 100 detecting the same physical event x(t) 106. The example in FIG. 1A depicts the sensor node network 100 in communication with sensor node network manager 104 operating on a data network component having a processor 104a and storage media 104b for storing data relating to the sensor node network 100 and instructions for performing sensor node network management functions. The data network component may be, for example, a server, or a gateway (*e.g.* M2M gateway), or any other network connected component that may be configured to provide sensor node network management services. The sensor node network management services may operate directly on such a network component (*i.e.* the connected server or gateway). The data network component may also provide connectivity to services on another connected network component, a web-based Internet site, or a cloud infrastructure. The processing used by an example implementation of a sensor node network manager 104 may involve distributed resources, such as distributed processing and distributed data storage resources. In other embodiments, sensor node network management services may be provided by one or more control nodes operating as a sensor node in the network, but with the added capability of managing at least portions of the sensor node network.

The example in FIG. 1A illustrates a situation in which both the sensors in the sensor nodes in the existing sensor node network 100 and the connecting sensor 102 detect the physical event 106 within their respective ranges. The existing sensor node network 100 is configured by the sensor node network manager 104 as a group such that the sensor nodes in the network 100 are known and have been allocated sensing tasks. The connecting sensor 102 presents as not known or configured by the sensor network manager 104. The physical event x(t) 106 could be, for example, a sudden change in background noise level, a sound event such as clapping of hands, a flash of light, or acceleration of a structure on which the sensor nodes of the sensor node network 100 may be mounted. The connecting sensor 102 in FIG. 1A may also be a node of an existing network other than the sensor node network 100 in FIG. 1A. In the example illustrated in FIG. 1A, the sensor node network manager 104 determines whether the connecting sensor 102 is contextually related to the sensor nodes in the sensor node network 100. The connecting sensor node 102 and the sensor nodes in the sensor node network 100 are contextually related if they detect the same physical event x(t) 106. In the example illustrated in FIG. 1A, contextually related sensor nodes are deemed to be co-located. For purposes of this disclosure, sensor nodes may be contextually co-located even if they are not in the same absolute location. Co-location includes a spatial range determined by the sensing range of the particular sensors measuring the physical events. When two sensors in two sensor nodes detect the same physical event, they are within a range in which the sensor nodes can be considered co-located.

The information relating to co-location, or contextual similarity, or contextual relation of a sensor node and a sensor node network can be used for granting access to an existing network or to a subset of an existing network. For example, sensor nodes may be organized in groups or sub=groups based on assigned sensing tasks. In the example illustrated in FIG. 1A, the connecting sensor node 102 may be a new sensor node seeking to configure itself as a member of the sensor node network 100. The sensor nodes in the sensor node network 100 may be viewed as being reference sensor nodes, or sensor nodes that are known to the sensor node network manager 104. The reference sensor nodes may be known due to a configuration process, or due to having been determined to be contextually related by checking to determine if they detect a common event. The reference sensor nodes may also be assigned to a group or a sub-group of sensor nodes. Referring to FIG. 1A, if the connecting sensor node 102 and the reference sensor nodes are contextually co-located, or detect a common event, the sensor node network manager 104 will add the connecting sensor node 102 to the network 100, or to the group or sub-group to which the reference nodes belong.

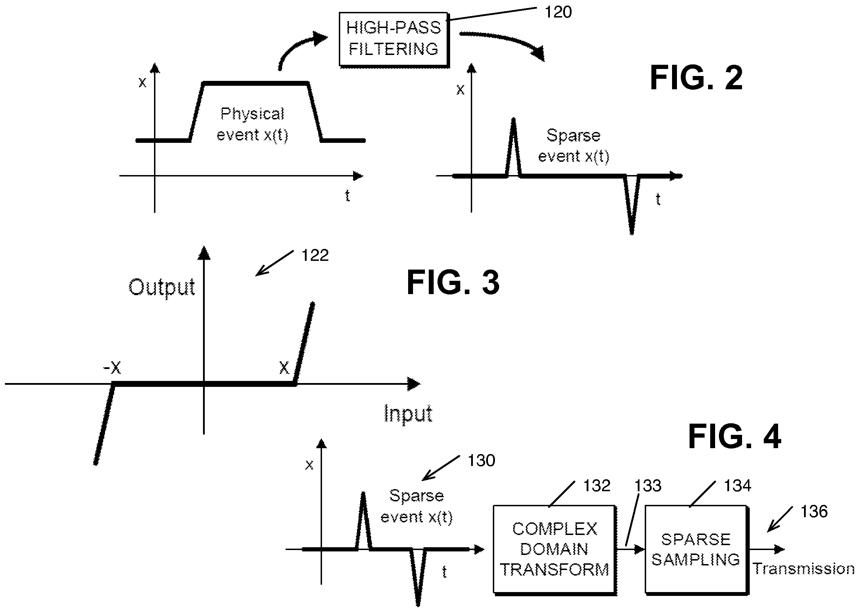

The contextual similarity between sensor nodes may be determined using environmental measurements taken by a sensor in each sensor node, transmitting the environmental measurements to the sensor node network manager 104 and comparing the environmental measurements. An environmental measurement is a data element representing a sensor signal generated from detecting a corresponding physical event. An environmental measurement may be in the form of a set of digital samples representing the signal sampled at a given sample rate, or in the form of a signal level, or in any other suitable form corresponding to the sensor being used. In some embodiments, environmental measurements utilized for the detection of the physical event 106 are processed to generate the environmental measurements in a form representing when the transients of contextual events within the environment are captured by the sensor. For example, the events may be recorded as sparse representations consisting for example of time domain pulses. Example implementations of event capture, pre-processing and transmission of environmental measurements to a sensor node network manager 104 are described below with reference to FIGs. 2-7.

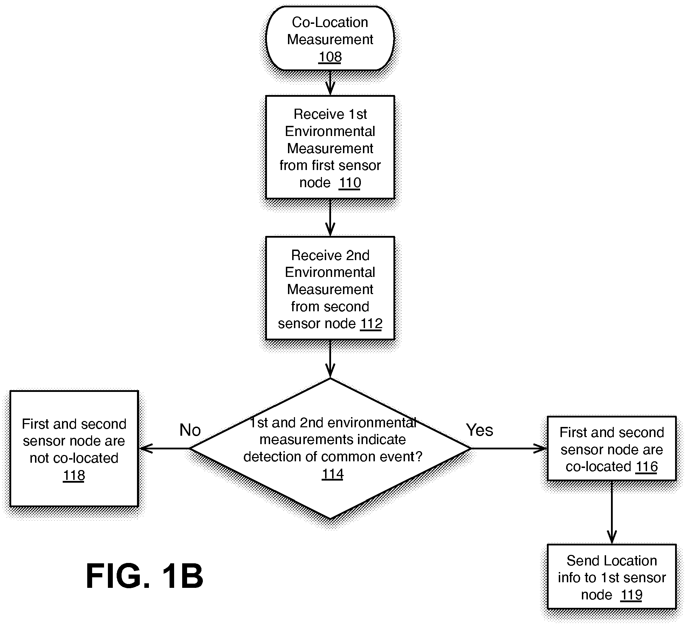

The environmental measurements of two different sensor nodes may be compared to determine if the environmental measurements include detection of a common event and use the comparison to determine if the two sensor nodes are co-located. FIG. 1B is a flowchart illustrating a method for determining whether two sensors are co-located 108. Referring to FIGs. 1A and 1B, a sensor node network manager 104 receives a first environmental measurement in a sparse representation from a first sensor node 102 at step 110. The sensor node network manager 104 receives a second environmental measurement in a sparse representation from a second sensor node, such as a sensor node in the network 100 at step 112. At decision block 114, the first environmental measurement and the second environmental measurement are compared to determine whether the first and second environmental measurements include detection of a common event, such as for example, the physical event x(t) 106 in FIG. 1A. The sensor node network manager 104 identifies a location of the first sensor node 102 relative to the second sensor node based on the first and second environment measurements include detection of the common event. If at decision block 114, it is determined that a common event was detected, the first sensor and second sensor are determined to be co-located at step 116. The location of the first sensor node may be recorded to be the location of the second sensor node, if the location of the sensor node is known. At step 119, the location of the second sensor node may be communicated to the first sensor node to store as its own location. In some embodiments, the environmental measurement of the first sensor node 102 may be compared with environmental measurements of other sensor nodes in the network 100, and the environmental measurements of the other sensor nodes in the network 100 may be compared with each other to monitor the contextual similarity of the sensor nodes.

If at decision block 114, the comparison resulted in a determination that the first and second sensor nodes did not detect a common event, the sensor nodes are deemed not to be co-located at step 118. The first sensor node may continue to transmit environmental information to other sensor node network managers that may be controlling other sensor nodes near enough to be contextually related.

In some embodiments, the sensor node network manager 104 managing the sensor node network 100 in FIG. 1A may perform a continuous contextual similarity check of the sensor nodes in the network 100. For example, the sensor nodes in the network 100 may be programmed, or instructed to continuously transmit environmental measurements to the sensor node network manager 104. The sensor node network manager 104 may perform the method 108 in FIG. 1B for pairs of sensor nodes in the network 100 on a continuous basis and maintain a contextual similarity measure for the sensor nodes in the network 100. If a sensor node compared with another sensor node recently verified to be contextually related to the other sensor nodes in the network 100 is determined to lack contextual similarity with the verified sensor node, it may be removed from the network. In such implementations, the sensor nodes in the network may operate as reference sensor nodes so that the environmental measurements of the first sensor node 102 (in FIG. 1A) is being compared to a plurality of reference environmental measurements generated by a corresponding plurality of reference sensor nodes. The set of reference sensor nodes in a network 100 need not consist of all sensor nodes in the network 100. In some examples, the sensor node network manager 104 may designate a subset of the sensor nodes in the network 100 to operate as reference sensor nodes. In addition, in a network comprising sensor nodes having more than one sensor, the sensor node network manager 104 may designate specific sensors from each sensor node to operate as reference sensors.

It is noted that using the method illustrated in FIG. 1B and other methods described herein, the comparison of events, transients and gestures as sparse representations may be performed even between sensors using different sensor modalities. For example, one device may record audio, while another may have only an accelerometer. In this case, the event gesture may be an audio event emitted from a vibrating object. One device may detect the event with a microphone, while a different device may detect the same event with an accelerometer. Comparison in the sparse domain may allow recognition that the sound and acceleration are attributable to the same event. A sudden event in sound pressure level can be observed also with accelerometer sensors.

## A. Contextual Similarity Measurement

### 1. Capturing the Event

In embodiments that transmit environmental measurements as sparse representations, the sensors in the sensor nodes generating the environmental measurements begin with signals generated by the sensing function of each sensor. The signals are typically sampled with a regular sampling frequency and converted to the digital domain by the sensor node. Although the actual information content is typically less than the given sampling frequency would suggest, the time domain signal cannot generally be sampled at a lower rate without losing information. Therefore, to enable compressed sensing, the signal may be transformed into a domain suitable for sparse representation. A signal consisting of sinusoidal harmonics, for example, can be represented in time-frequency transform domain quite efficiently as a sparse impulse train. The compressed sensing can then be performed using, for example a signal transformed using a digital Fourier transform (DFT).

If the detected event is a time domain transient, a simple high-pass filtering removes unnecessary data. Since the access method is only interested whether the connecting device and existing sensor network detected the event simultaneously, there is no need to capture more details about the signal. It may be sufficient to record only the transient incidents. FIG. 2 illustrates pre-processing of a sensor signal using a high-pass filter 120 to extract the relevant information about an event. A physical event x(t) is processed by high-pass filter 120 to generate a sparse event, x(t). In addition, the output may be processed with a threshold function. FIG. 3 illustrates an example of a threshold function 122 with value X for a high-pass filtered signal. When the filtered signal exceeds a predetermined level, X, the output is activated. In some embodiments, an adaptive threshold function may be applied. The threshold value X of FIG. 3 may, for example, have a value of twice the sensor signal variance in the given analysis window. The result is a sparse time domain signal carrying information only about the event start and stop time. Events from different sensors represented in the sparse domain can readily be compared with one another.

In some embodiments, the resulting sparse signal is normalized. Alternatively, each time domain pulse in the sparse signal may be assigned a value of 1 or -1 depending on the sign of the pulse, or the signal level may be normalized so that the inner product of the signal is unity.

The sensor network illustrated for example in FIG. 1A may conduct beam forming of acoustic emission. As a sensor network with known node location can be arranged as microphone arrays, the network may capture very detailed location estimation of prevailing context.

### 2. Sparse Event Transmission

Captured sparse events are transmitted to a server or other contextual analysis entity, such as the sensor node network manager 104 in FIG. 1A, that conducts the similarity check. The transmission is preferably conducted in an efficient way to limit the resources needed to conduct the similarity check.

### 3. Sparse Event Handling

In some embodiments, a sparse event is multiplied by a predefined sensing matrix. The sensing matrix transforms the sparse signal into a form suitable for sparse representation. In this case, it is advantageous to apply, for example, a complex domain transform matrix. The transform domain signal is then resampled with significantly lower sampling rate. FIG. 4 illustrates this process. FIG. 4 illustrates multiplication of a sparse domain signal 130 with a complex transform matrix 132, after which the signal is subsampled at 134 and forwarded to a transmission channel at 136. The transformed sparse signal 133 is subsampled at 134 by, for example, taking couple of random samples. It should be noted that, although the selection is random, the selection mechanism is used later in the reconstruction phase.

### 4. Compressed Sensing Approach

The compressed sensing method enables reconstruction of an input signal using far fewer samples than the Nyquist sampling theorem would suggest. The compressed sensing protocol uses the sparse representation of the input data when capturing and processing a subset of the incoming data samples. The information rate is thus considerably lower than the actual Nyquist sampling rate. In the reconstruction phase, the compressed sampled data can be recovered using, for example, numerical optimization methods when the sensing method is known.

One benefit of compressed sensing is that it enables sensors to sense with a low data rate at the capturing side while the reconstruction is performed using computational power at the data network component operating the sensor node network manager 104 (in FIG. 1A).

A compressed sensing method first applies a specific sensing mechanism to the input signal. Generally, the signal may first be converted into sparse representation domain, after which the sparse sensing can take place. For example, let $f(n)$ be the vector that is obtained by transforming the input signal $x(n)$ with a $n \times n$ transform matrix $\Psi$, which could be e.g. a digital Fourier transform (DFT). That is, the input signal $x(n)$ is first represented in transform domain as $f(n) = \Psi x(n)$.

The intention is that the data representation in a given transform domain is sparse in such a manner that the input signal can be later reconstructed using only a subset of the original data. In this case, the effective bandwidth of signal $f$ is so low that a small number of samples is sufficient to reconstruct the input signal $x(n)$. It is easy to see that a time domain signal consisting of limited number of sinusoidal harmonics will have sparse representation of pulses in the transform domain. The subset of input data consisting of $m$ values is acquired with a $m \times n$ sensing matrix consisting of row vectors as follows

$$y_k = \langle f, \varphi_k \rangle, \qquad k = 1, \ldots, m \ . \tag{1}$$

If for example the sensing matrix $\varphi$ contained only Dirac delta functions, the measured vector $y$ would simply contain sampled values of $f$. Alternatively, the sensing matrix may pick $m$ random coefficients, or simply the first $m$ coefficients of the transform domain vector $f$. Alternative sensing matrices may be employed.

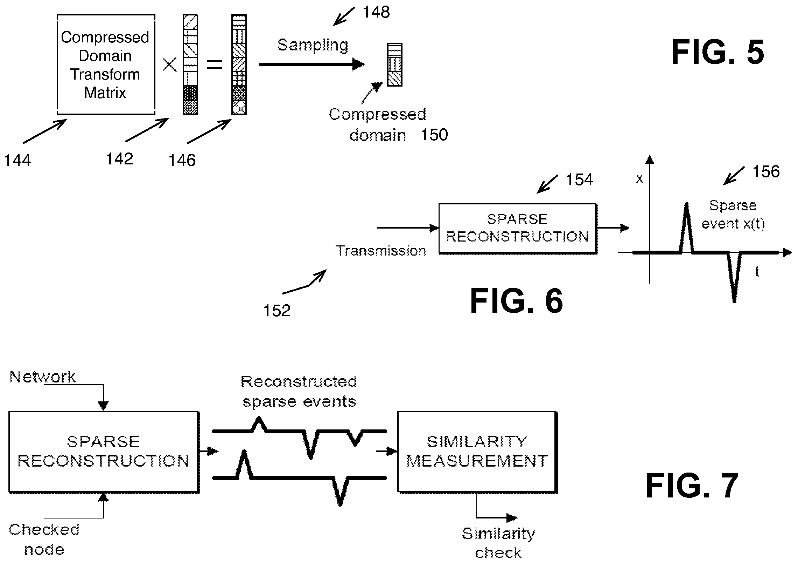

FIG. 5 illustrates the use of compressed sampling applied to the given analysis window of the sensor signal. In the example shown in FIG. 5, a complex domain transform matrix 144 is multiplied by a sensor signal vector 142 to generate a transform domain vector 146. The transform domain vector 146 is then sampled at 148 to yield a compressed domain vector 150. In one embodiment, the compressed sampling at 148 is performed by picking a predetermined number of first transform coefficients (e.g., the first $m$ coefficients).

Two methods are described herein for reconstructing the input signal $x(n)$ using the measured vector $y$ and the knowledge of sensing and transform matrices $\varphi$ and $\Psi$. One such method is the numerical optimization method; another is an algorithm utilizing an annihilating filter typically used in spectral estimation. Other methods of reconstructing the input signal may also be used.

### 5. Transmission

Referring to FIG. 1A, the sensor nodes, such as the sensor nodes in the network 100 or the connecting sensor node 102, generate the sparse signal transformed into the compressed domain as described above with reference to FIGs. 2-5. The sparse signal transformed into the compressed domain is transmitted to the sensor node network manager 104 (*e.g.* on a M2M gateway or sensor network server) for reconstruction and similarity analysis. To transport the transformed sparse signal efficiently, the transform coefficients may be quantized and packetized in for example JavaScript Object Notation (JSON) data structure in real-time protocol (RTP) payload. The compressed domain transform coefficients are, for example, vector quantized jointly. Hence, all the coefficients are in a single vector using standard vector quantization tools. The bit stream may further be entropy coded, for example with Huffman coding. Alternatively, each transform coefficient may be scalar quantized and further entropy coded to lower the bit stream size. In one example, the transform coefficients are packetized as floating-point numbers in a JSON data structure.

When the sparse time domain signal is normalized before the complex domain transform (for example with DFT), the efficiency of quantization can be enhanced because the variance of the coefficients to be quantized is within known limits.

An exemplary packet transmitted from a sensor node contains $2K + 1$ DFT coefficients, time stamp informing about the start time of the analysis window, and information identifying the sensor node. The packet may also include information identifying the detected sensor modality.

## 6. Reconstruction with Numerical Optimization

FIG. 6 illustrates an example implementation in which a M2M gateway receives a low sampling rate message at 152 and performs a reconstruction at 154 to generate a time domain sparse signal 156.

In an example implementation, an original data vector can be reconstructed with the knowledge that $y_k = \varphi_k \Psi x$. The least squares solution by (pseudo) inverting the $m \times n$ transform and measurement matrix is not effective with sparse signals. Instead, the reconstruction task consisting of $n$ free variables and $m$ equations can be performed applying a numerical optimization method as follows

$$\min_{\widetilde{x} \in \mathfrak{R}^n} \left\| \widetilde{x} \right\|_{l_1} \text{ subject to } y_k = \langle \varphi_k, \Psi \widetilde{x} \rangle, \quad k = 1, \ldots, m .$$

That is, from all the possible valid data vectors $\widetilde{x} \in \mathfrak{R}^n$ matching the measured data vector $y = \varphi \Psi \widetilde{x}$ the one that has the lowest $l_1$ norm is selected.

## 7. Reconstruction with the Annihilating Method

In another embodiment, the data vector $\widetilde{x}$ reconstruction is performed using the Annihilating filter method. In this method, the input $f$ is first transformed using either a random complex-valued matrix or, for example, a DFT transform matrix.

Instead of any particular structured sensing matrix, the sensing is conducted by simply taking the first $m + 1$ transform coefficients. Data reconstruction is then conducted by forming a $m \times (m + 1)$ Toeplitz matrix using the acquired transform coefficients and their complex conjugates $y_{-m} = y^*_m$. Hence, $2m + 1$ coefficients are needed for the reconstruction.

$$H = \begin{bmatrix} y_0 & y_{-1} & \cdots & y_{-m} \\ y_1 & y_0 & \cdots & y_{-m+1} \\ \vdots & \vdots & \vdots & \vdots \\ y_{m-1} & y_{m-2} & \cdots & y_{-1} \end{bmatrix} . \tag{2}$$

The complex domain coefficients of the given DFT or random coefficient transform have the knowledge embedded about the positions and amplitudes of the coefficients of the sparse input data. Hence, as the input data was considered sparse, it is expected that the Toeplitz matrix contains sufficient information to reconstruct the sparse data.

In practice, the complex domain matrix contains information about the combination of complex exponentials in the transform domain. These exponentials represent the location of nonzero coefficients in the sparse input data $f$. The exponentials appear as resonant frequencies in the Toeplitz matrix $H$. A convenient method to find the given exponentials is to apply an Annihilating polynomial that has zeroes exactly at those locations cancelling the resonant frequencies of the complex transform. That is, the task is to find a polynomial

$$A(z) = \prod_{i=0}^{m-1} (1 - u_i z^{-1}) \text{ such that } H * A(z) = 0 . \tag{3}$$

When Equation (3) holds, the roots $u_k$ of the polynomial $A(z)$ contain the information about the resonance frequencies of the complex matrix $H$. The Annihilating filter coefficients can be determined using, for example, the singular valued decomposition (SVD) method and finding the eigenvector that solves the Equation (3). The SVD decomposition is written as $H = U\Sigma V^*$, where $U$ is a $m \times m$ unitary matrix, $\Sigma$ is a $m \times (m + 1)$ diagonal matrix containing the $m$ nonnegative eigenvalues on the diagonal, and $V^*$ is a complex conjugate $(m + 1) \times (m + 1)$ matrix containing the corresponding eigenvectors. As noted, the matrix H is of the size $m \times (m + 1)$, and therefore, the rank of the matrix is $m$ (at maximum). Hence, the smallest eigenvalue is zero and the corresponding eigenvector in matrix $V^*$ provides the Annihilating filter coefficients solving the Equation (3).

Once the polynomial $A(Z)$ is found, the $m$ roots of the fonn $u_k = e^{j2\pi n_k/N}$ are solved to find the positions $n_k$ of the nonzero coefficients in input data $f$. The remaining task is to find the corresponding amplitudes $c_k$ for the reconstructed pulses. Having the roots of the Annihilating filter and the positions and the first $m + 1$ transform coefficients $y_k$, the $m$ amplitudes can be determined using $m$ equations according to Vandermonde system as follows

$$
\begin{bmatrix}
1 & 1 & \dots & 1 \\
u_0 & u_1 & \dots & u_{m-1} \\
\vdots & \vdots & \vdots & \vdots \\
u_o^{m-1} & u_1^{m-1} & \dots & u_{m-1}^{m-1}
\end{bmatrix}
\begin{bmatrix}
c_0 \\
c_1 \\
\vdots \\
c_{m-1}
\end{bmatrix}
=
\begin{bmatrix}
y_0 \\
y_1 \\
\vdots \\
y_{m-1}
\end{bmatrix}.
\tag{4}
$$

When the intention is to recover only the location of a transient, event or gesture, such as by using the location of the sparse time domain pulse, there is no need to determine the amplitudes and solve Equation (4).

The Annihilating filter approach is very sensitive to noise in the available measured vector $y_k$. Therefore, the method may be combined with a de-noising algorithm to improve the performance. In this case, the compressed sensing requires more than $m + 1$ coefficients to reconstruct sparse signal consisting of $m$ nonzero coefficients.

## 8. Iterative De-noising of the Annihilating Filter

The $m \times (m + 1)$ matrix $H$ constructed using the received transform coefficients is by definition a Toeplitz matrix. However, the compressed sampled coefficients may have poor signal to noise (SNR) ratio, for example due to quantization of the transform coefficients. In this case the compressed sensing may provide the decoder with $p + 1$ coefficients ($p + 1 > m + 1$)

The de-noising algorithm iteratively first conducts a SVD decomposition of the $p \times (p + 1)$ matrix as $H = U\Sigma V^*$, sets the smallest $p - m$ eigenvalues to zero, builds up the new diagonal matrix $\Sigma_{new}$ and reconstructs the matrix $H_{new} = U\Sigma_{new}V^*$. The resulting matrix $H_{new}$ may not necessarily be in Toeplitz form any more after the eigenvalue operation. Therefore, it is forced into Toeplitz form by averaging the coefficients on the diagonals above and below the actual diagonal coefficients. The resulting de-noised matrix is then SVD decomposed again. This iteration is performed until the smallest $p - m$ eigenvalues are zero or close to zero, or the $(m + 1)^{th}$ eigenvalue is smaller than the $m^{th}$ eigenvalue by some threshold.

Once the de-noising iteration is completed, the annihilating filter method can be applied to find the positions and amplitudes of the sparse coefficients of the sparse input data $f$. It is noted that the $m + 1$ transform coefficients $y_k$ are taken from the de-noised Toeplitz matrix $H_{new}$.

## 9. Signal Reconstruction

The number of transform coefficients selected by the compressed sensing algorithm depends on the requirements for the reconstructed signal. In general, perfect lossless reconstruction is not required to implement the systems disclosed herein. The detection of context similarity relies primarily on transients in a multi modal sensor signal consisting of time domain transients or gestures. Therefore, there is no need to reconstruct the actual waveform of the multi modal sensor signal.

Applying the Annihilating filter based method, the compressed sensing may pick $m + 1$ or more first transform coefficients, which are provided for the compressed sensing decoder, for example in a server conducting the context extraction. The number of required coefficients depends on the transformed signal. If the number of pulses in the signal is $K$, the number of required DFT coefficients is $2K + 1$.

**B. Example Implementations of Sensor Node Co-location Using a Compressed Sensing Approach**

The compressed sensing approach is applied to collect a minimal amount of transform coefficients while still permitting representation of the captured event in the sparse domain. Since only a limited number of transform coefficients are needed, the computation may also be limited. FIG. 7 illustrates an example process of receiving sparse signals and reconstructing the sparse signals to perform a similarity measurement. As illustrated in FIG. 7, the compressed sampling can be achieved by transforming only the coefficients that are later picked up in the compressed domain. Comparing reconstructed sparse events of two or more connected devices reveals the contextual similarity of the sensed context. The knowledge about the contextual similarity can be utilized, for example, for granting an access for the connecting device to the existing network or checking that the network elements are within the range of the point of interest.

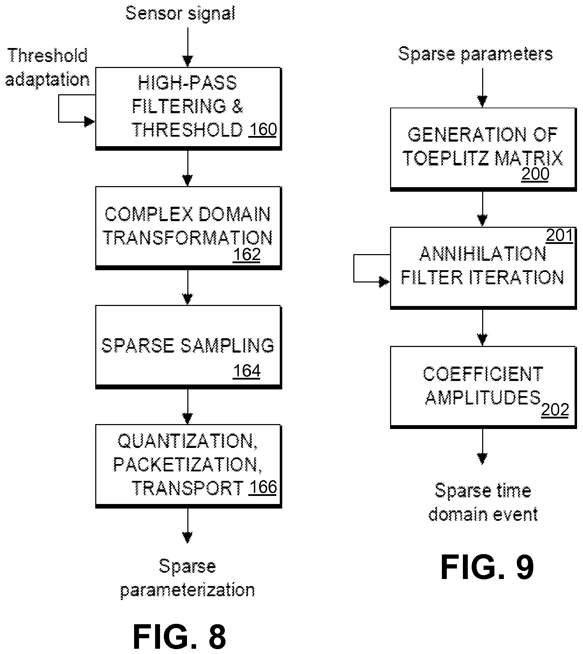

Referring to FIG. 1A, a contextual similarity check between the existing sensor network 100 and the connecting sensor 102 begins with measuring the environment with a predefined set of sensors. The environmental measurements are processed to generate sparse representations of the environmental measurements. FIG. 8 illustrates the process.

FIG. 8 is a flowchart illustrating sensor signal event capture. A measured sensor signal of length N samples is forwarded to a pre-processing function at step 160. The method illustrated in FIG. 8 pre-processes the signal by high-pass filtering the signal and applying a threshold function at 160 with a predefined threshold so that the signal level exceeding a predefined threshold is considered. The threshold function at step 160 may apply an adaptive threshold by selecting the threshold value proportional to the variance of the input signal vector. The filtered signal is a pulse like signal that can be considered a sparse signal. In step 162, the sparse domain signal is transformed in the complex domain. A DFT transform is one example of a suitable transform matrix that may be used in step 162. The transform domain is finally subsampled by picking only a predetermined number of first DFT domain coefficients in step 164. The higher the number of picked coefficients is, the better the detected event is in the end reconstructed. However, since the intention is to reconstruct only the pulses and the sparse representation, fewer than ten coefficients is generally sufficient. There is no need to encode the pulse locations or pulse amplitudes in the transport parameters since all the information is included in the transform coefficients. The small number of coefficients selected are quantized and packetized for transport in step 166.

As shown in FIG. 7, the sparse representations of the sensor signals generated using the method illustrated by the flowchart in FIG. 8 are transmitted to the sensor node network manager 104 (in FIG. 1A) for reconstruction of the signal as a sparse time domain event. FIG. 9 is a flow diagram illustrating sparse sensor signal event reconstruction. When the sparse parameters are received, a Toeplitz matrix (Equation 2) is generated using the received DFT domain coefficients in step 200. The sparse signal pulse positions are solved by an Annihilating filter (Equation 3). At step 201, the iterative de-noising of the filter is performed. The sparse time domain events are generated in step 202 by solving Equation 4.

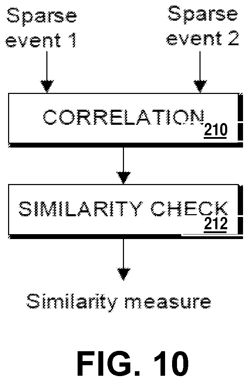

The reconstructed sparse time domain events are in condition for comparison to determine a contextual similarity. FIG. 10 is a flowchart illustrating sensor signal similarity measurement. The method illustrated in FIG. 10 is an example of a comparison step that may be performed in decision block 114 in FIG. 1B. It is noted that the sparse time domain events, or reconstructed sparse signals, are generated from the sensor signals detecting a physical event generated by a sensor in a sensor node being checked for contextual similarity. As described above with reference to FIG. 8, the sensor node transmits the sensor signals as environmental measurements in a sparse parameter representation as sparse sampled DFT domain coefficients. Once reconstructed as sparse events in the time domain, the signals are ready for comparison. As shown in FIG. 10, a first sparse event generated by a first sensor node is compared using a cross-correlation function at step 210 with a second sparse event generated by a second sensor node.

The cross-correlation value generated at step 210 is checked to determine if it indicates a contextual similarity between the first sparse event and the second sparse event at step 212. The higher the cross-correlation value generated, the more likely it is that the first sparse event and the second sparse event are signals generated by the first and second sensors sensing the same physical event. In some embodiments, a threshold correlation may be defined to determine that there is, or there is not, contextual similarity indicated by the sparse events. In some embodiments, for example, when the maximum correlation within a given time frame, such as for example one second, is greater than 0.5, the signals can be considered to contain the same captured event, and hence, the sensor nodes are classified as being located within the same contextual location.

The example illustrated in FIG. 10 determines a level of contextual similarity between two environmental measurements generated by two different sensor nodes. In the example, the first sensor node is the connecting sensor node (e.g. connecting sensor node102 in FIG. 1A). In an example implementation, the second sensor node may be a reference sensor node, or as a selected sensor node in a network of sensor nodes. The location of the second sensor node may be known, in which case, the location of the second sensor node is assigned to the first sensor node when they have been classified as contextually related. In some embodiments, the information relating to the location of the second sensor node is communicated to the first sensor node. The first sensor node may then include its location in any messages it may communicate to either other sensor nodes or to the sensor node network manager 104 (in FIG. 1A).

The determination of whether sensor nodes are co-located may be used to determine whether a sensor node may be added to a network (as described above with reference to FIG. 1B), or added to a group or sub-group of sensor nodes, or removed from a network, group or sub-group of sensor nodes. Co-location may also be used to determine aspects of the environment surrounding the co-located sensor nodes, such as for example if there is a barrier between sets of sensor nodes,

One embodiment takes the form of a process in which a first sensor node performs a measurement of an environmental parameter to generate a first environmental measurement in a sparse representation. A sparse representation of a second environmental measurement is received from a second sensor node in a request to establish a communications link with the first sensor node. The second environmental measurement is reconstructed from the sparse representation. The first environmental measurement is compared with the second environmental measurement to determine whether the first and second environmental measurements include detection of a common event. Only after determining that the first and second environmental measurements include detection of a common event, a communications link with the second sensor node is established.

Another embodiment takes the form of an apparatus that includes a transceiver, at least one environmental sensor operative to generate a first time-domain environmental measurement, a processor, and a non-transitory memory storing instructions that, when executed on the processor are operative to: (i) receive a sparse signal representation over the transceiver; (ii) to reconstruct a second time-domain environmental measurement from the sparse signal; and (iii) to compare the first time-domain environmental measurement with the second time-domain environmental measurement to determine if the first time-domain environmental measurement and the second time-domain environmental measurement include detection of a common event.

In another embodiment, the co-location of the network nodes may be controlled by emitting special detection signals of the modality corresponding to the available sensors of the network. Accurate location of the emitted signal is not needed since the co-located nodes will detect the emitted signal and hence are classified as being within the same location.

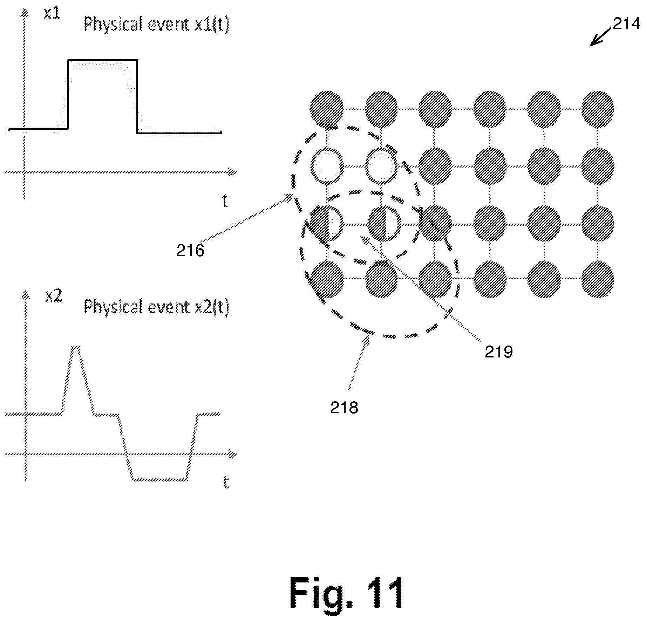

In another embodiment, the sensor node network may conduct self-organization without explicit location information. First, nodes detecting the same physical event are co-located and may be organized as a group of sensor nodes by a network management function. The network then organizes itself into subgroups based on events detected in different positions by one or more sensor nodes. Based on the similarity and co-location estimation results, nodes may be classified simultaneously in more than one subgroup. FIG. 11 is a schematic diagram depicting an example of a sensor node network 214 organized in a first group 216 and a second group 218 that overlap at 219 allowing for convenient analysis of the overall network structure and topology relative to each other. For example, if even only a limited number of the sensor nodes in either group have location information, an accurate topology of the whole network may be determined. Furthermore, the unique events detected by different subgroups 216, 218 of the network 214 may consist of one or more different modalities since the context analysis may be conducted with one or more sensor signals simultaneously.

In another embodiment, the efficient event detection and transmission of data as sparse representations can be applied to constant monitoring of the environment. The constant monitoring may be used for self-organization of the network by continuously identifying the location of each sensor node in the network, or by verifying that each sensor node remains a valid member of the network. The method illustrated in FIG. 1B may be performed on a continuous basis. The environmental measurements from the sensor nodes in the sensor node network 100 (in FIG. 1A) may be continuously compared to each other to continuously updated estimation of the network topology. In addition to the continuous network topology estimation, the network may apply detection results in environmental analysis. For example, a wireless network consisting of independently moving sensor nodes may conduct both self-organization and environmental monitoring. Sensor-based contextual co-location estimation may be used to estimate the location and motion of nodes within a mobile network. When the network nodes are in traffic or in a stream, the motion and the flow may be detected by monitoring how the context of the environment evolves within the network. For example, the moving nodes may pass a location containing a predefined beacon with unique signal. The network motion is detected by monitoring how the corresponding context is detected within the network. The range of the contextual event may be significantly different from the range of the wireless link connecting the nodes to each other or to the Wi-Fi/Bluetooth hot spot, base station, or satellite link.

The environmental monitoring may also consist of detecting changes in detected modalities as well as mapping the environment, such as for example, mapping an unknown facility or area. Environmental monitoring may be used for tracing back the most common routes people or any moving object is taking and analyzing the structure of the given area.

A service based on sensor networks may monitor, for example, several physical sensor modalities such as temperature, air pressure, illumination, acceleration, and audio, among other modalities. In an example embodiment, a connecting sensor node, such as the sensor node 102 in FIG. 1A, may have a set of sensors only for measuring temperature and illumination and generate a multimodal sensor signal vector. In such an embodiment, if there is a sudden change in lighting conditions, the outcome of the given multimodal sensor signal vector contains a transient or a gesture. When the time-domain transient or gesture is detected both in an existing network sensor node as well as in the connecting sensor node, the network proceeds with the establishment of the connection to the network or ensuring the co-location of the connecting sensor node.

The methods described herein for determining co-location of sensor nodes are useful for indoor navigation and location-based services. For example, when a user enters a specific location or store within a large shopping mall, the mobile device the user is carrying begins sensing the same environmental context as the nearby-networked sensors. Hence, the user's device may then join the local domain of the network. For example, when the user is entering a shop, the door slam or doorbell sound event is detected by both the sensor network infrastructure and the mobile device. The location-based service may than apply the knowledge of proximity to other sensor nodes without explicit location detection.

In some embodiments, the sensor node network 100 (in FIG. 1A, for example) may be a wireless sensor network of sensor nodes that communicate with each other and/or with a sensor node network manager 104 wirelessly. The wireless sensor network may constantly monitor the network integrity incorporating context similarity measurements as described herein. The wireless sensor nodes may compare the sensed environment against each other for example in round-robin style. As long as the sensor pairs are detecting the same event, they are considered to share the same location and context. Hence, the sensor nodes with similar context can be considered as their own sub-network.

The sensor network may further apply beam-forming techniques for even more accurate location estimation of contextual events and gestures. In such embodiments, several acoustic emission sensors may be configured as a sensor array capable of monitoring the location of a received sensor signal.

The self-organizing network may also reveal the environmental structure and features when detecting signals. For example, some sensor modalities, such as sound events, do not effectively penetrate walls. Thus, if nodes are otherwise detected to be near one another, but they do not detect the same audio events, it may be determined that a wall separates the nodes. Furthermore, the structure may be analyzed even more accurately in embodiments involving the detection of which signals can or cannot be detected by multiple nodes. For example, a sound may not be heard through window, while illumination changes are visible. Knowledge that visual context is shared while audio context of the same sub group is not shared thus reveals information about the environment. In this case, for example, the nodes may be separated by a window. Alternatively, in underwater conditions, visual cues may be weak while audio signals, especially with low frequencies, may travel very well. Hence, having more than one modality available for contextual analysis of the location can be used to provide more detail regarding the environment. Furthermore, the same concept is applicable for any new modality that enables service scalability and more accurate results.

In an example embodiment of a method in which a barrier or obstacle is detected based on an environmental analysis of a sensor node network, a first environmental measurement using a first sensor modality and a second environmental measurement using a second sensor modality from a first sensor node are received at a sensor node network manager. A third environmental measurement using the first sensor modality and a fourth environmental measurement using a second sensor modality from a second sensor node are also received at the sensor node network manager. Comparison of the environmental measurements received may result in determining that the first and third environmental measurements include detection of a common event, that the second environmental measurement includes detection of the common event, and that the fourth environmental measurement does not include detection of the common event. Based on the determinations that the first and third environmental measurements include detection of the common event, that the second environmental measurement includes detection of the common event, and that the fourth environmental measurement does not include detection of the common event, a barrier is determined to be present between the first sensor node and the second sensor node. Continued analysis may enable determination of the location or even type of barrier (e.g. a window) based on the modality of the sensing of the environmental measurements.

Methods as described herein may be used for tracking the location of portable devices within large facilities such as hospitals and manufacturing plants. It is helpful to know where expensive equipment is located within the facility. For example, a hospital may save significant amount of money and resources and may even need less equipment, when the location of each implement is known in all times.

Integrating simple acoustic emission sensors within smoke detectors may be used to monitor the contextual environment. When a mobile tool is equipped with similar context analysis, the location can be estimated continuously. The sensor network instrumentation in the facility is thus constantly monitoring events and gestures with the available modalities. The information corresponding to each sensor and hence to each known location is stored in the network server together with time stamp information. The data could be stored as raw data in compressed sensing domain collected from the nodes or as processed location data. In the former case, the contextual similarity and co-location analysis is conducted when the results are requested, while in the latter case the results are available directly and the database does not need to include a context analysis entity. The mobile device to be tracked is conducting the same sensing of the environment. The same sparse domain event information is stored in the network either continuously or at regular intervals. When the whereabouts of the mobile device needs to be identified, the data captured by the network and the mobile device is retrieved from the database and the co-location is determined according to the method described herein. In addition to the latest location, the data in the database enables tracing the past locations of the device.

In the event that the natural contextual events are not frequent enough, the location estimation may be further improved by artificially generating events with the predefined modalities. For example, the system may emit sound sources on a frequency range not audible to human listeners but detectable with given sensors. Other embodiments employ light sources, such as different type light bulbs with different frequencies. Different predefined locations may have different signal sources and signal patterns helping the contextual analysis to conduct the location estimation. Controlled and predefined events in predefined locations reveal the mobile device position when detected sparse patterns are compared to emitted patterns. Alternatively, the signal sources may emit random events. Detection of the random events may be used for navigation. In this case there is no need to control the location of the emitted sound since the network and mobile device are searching for common events.

## II. Contextual Similarity Measurements for Network Organization

In embodiments disclosed herein, a sensor network and an M2M service of one or more connected devices monitors the environment with predefined set of one or more sensors within a given area or range. A network sensor node captures primary content and one or more types of secondary content in the same general location as the other nodes of the connected network. When the connected network, or a subset of the network, resides in the same area with the given sensor node, they capture the same content in the same environment, and hence, detect the same events. Information about the simultaneous events in the same modalities can be applied to determine the simultaneous operation, co-location and existence of shared content. A detected event that starts a co-location determination could be, for example, a sudden change in background noise level, a sound event such as clapping of hands, flash of light or acceleration of the structure in which the sensor nodes are attached. The similarity of the detected events reveals the co-location of the nodes.

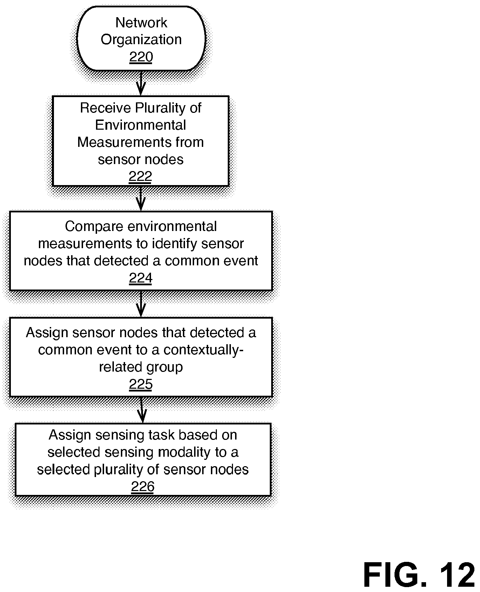

An example of how contextual similarity measurements may be incorporated in network organization of a sensor node network including for example, allocation of sensing tasks and modalities is illustrated in FIG. 12.

FIG. 12 is a flowchart illustrating operation of a method 220 of mapping sensor nodes in a network of sensor nodes into a group based on context similarity and assigning sensing tasks based on modality. The sensor nodes in the network of sensor nodes are of a type of sensor node that includes more than one sensor and the sensors are capable of sensing in different modalities. The method 220 illustrated in FIG. 12 may be performed by a sensor node network manager, such as the sensor node network manager 104 described above with reference to FIG. 1A. It is noted that the sensor node network manager may operate as a M2M Gateway or on a server, control node, or cloud service.

In the method 220 in FIG. 12, the sensor nodes in the network are assumed to be transmitting environmental measurements to the sensor node network manager. The transmissions may be periodic or on a continuous basis or as requested by the sensor node network manager. At step 222, the sensor node network manager receives a plurality of environmental measurements generated by a respective plurality of sensor nodes in the network. As noted above, each sensor node comprises at least a first sensor using a first sensing modality and a second sensor using a second sensing modality. In some embodiments, the environmental measurements are received in a sparse representation. In some embodiments, the plurality of sensor nodes may be all of the sensor nodes in the network, or the plurality of sensor nodes may be a selected set of the sensor nodes in the network. Sensor nodes may transmit environmental measurements in a data stream that includes information such as the sensor measurements for the context analysis, sensor id, available sensor modalities, time stamp, optional location information of the sensor, relevant status information such as battery charge level, and computational capabilities.

At step 224, the plurality of environmental measurements are compared in order to identify environmental measurements that include detection of a common event. In some embodiments, the comparison is performed by determining a cross-correlation between environmental measurement values, and performing the comparison repeatedly so that all of the plurality of environmental measurements are compared.

At step 225, sensor nodes that generated environmental measurements that indicate a detection of the common event are assigned to a contextually related sensor node group. The sensor node network manager has knowledge of the capabilities of the sensor nodes in the network obtained for example from the data stream transmitting the environmental measurements. At step 226, a selected plurality of sensor nodes in the group are assigned a sensing task based on a selected sensing modality. The sensing task may be to obtain environmental measurements using the sensor's modality, or the sensing task may be a specific way for the sensor to use its sensing modality. For example, a sound sensor may be assigned a sensing task to detect sound, or to detect sound in a particular frequency range. The assigned sensing task may also be a location based measurement task, or a context-similarity measurement task. It is not necessary for all sensors to be allocated.

In an example implementation, the sensor node network manager may perform further allocation of sensing tasks and sensor nodes. For example, in step 226 the sensor node network manager may assign the sensing task where the selected sensing modality is a first sensing modality. The selected plurality of sensor nodes may be a first selected plurality of the sensor nodes in the contextually related group. In further steps to an example method, a second plurality of sensor nodes in the contextually related group is assigned a sensing task based on a second sensing modality. In order to distribute tasks to multiple sensors to provide redundancy but not so much redundancy that resources may be wasted, each of the sensor nodes in the contextually related group assigned a sensing task is assigned to perform sensing using no more than one sensor, or use no more than one sensing modality.

In an example embodiment, a sensor node network may comprise a set of predefined sensor nodes where a set of predetermined sensors transmit environmental measurements for purposes of determining contextual similarity. The predetermined sensors may be selected for having low complexity, low battery consumption and low bandwidth contextual co-location estimation.

The sensor allocation process illustrated in FIG. 12 may be conducted as a continuous process allowing for the context similarity and sensor allocation to be adapted periodically. The sensor node network manager may perform the process to determine contextual similarity between the sensor nodes and create a group of at least some of the sensor nodes deemed to be contextually related. The sensor nodes in the group are also deemed co-located and may be assigned a location if the location of any of the other sensor nodes in the group is known. The sensor nodes in the group may then be allocated sensing tasks that may organize the group into sub-groups of sensor nodes assigned different sensing tasks.

In some embodiments, the network gateway or other control node stores information regarding the group associations of the sensor nodes. For example, in a database, data object, or table, the network gateway may store an association between, on the one hand, an identifier of a sensor node and, on the other hand, identifiers of zero or more groups to which the sensor is assigned. Conversely, the network gateway may store an association between, on the one hand, a group identifier, and on the other hand, the identifiers of zero or more sensor nodes assigned to the relevant group. The network gateway may also store, for each sensor node identifier, information identifying the sensing capabilities of the sensor node and information identifying the sensing modalities that the sensor node is assigned to perform. A database storing information about a sensor node network may be organized as shown in Table 1 below.

**Table 1**

| Sub-Group Identifier | Sensor Node Identifier | Sensor Node Location | Sensor Node Sensors | Sensor Node Sensors Modalities | Node Sensor Sensing Task |
|---|---|---|---|---|---|
| SUB-GROUP 1 | NODE1001 | LOC1 | Microphone | Sound | Context Measurement |
| | | | Photocell | Light | Illumination |
| | | | Microphone | Sound | |
| | NODE1002 | LOC1 | Microphone | Sound | Context Measurement |
| | | | Photocell | Light | Illumination |
| | | | Microphone | Sound | |
| | NODE1003 | LOC1 | Microphone | Sound | |
| | | | Photocell | Light | Illumination |
| | | | Microphone | Sound | |
| | NODE1004 | LOC1 | Microphone | Sound | Context Measurement |
| | | | Photocell | Light | Illumination |
| | | | Microphone | Sound | |
| | NODE1005 | LOC1 | Microphone | Sound | |
| | | | Photocell | Light | Illumination |
| | | | Microphone | Sound | |
| | NODE1006 | LOC1 | Microphone | Sound | Context Measurement |
| | | | Photocell | Light | Illumination |

(continued)

| Sub-Group Identifier | Sensor Node Identifier | Sensor Node Location | Sensor Node Sensors | Sensor Node Sensors Modalities | Node Sensor Sensing Task |
|---|---|---|---|---|---|
| | | | Microphone | Sound | |
| SUB-GROUP 2 | NODE1007 | LOC1 | Microphone | Sound | |
| | | | Photocell | Light | Context Measurement |
| | | | Microphone | Sound | Frequencies below X hz. |
| | NODE1008 | LOC1 | Microphone | Sound | |
| | | | Photocell | Light | |
| | | | Microphone | Sound | Frequencies below X hz. |
| | NODE1009 | LOC1 | Microphone | Sound | |
| | | | Photocell | Light | Context Measurement |
| | | | Microphone | Sound | Frequencies below X hz. |
| | NODE1010 | LOC1 | Microphone | Sound | |
| | | | Photocell | Light | |
| | | | Microphone | Sound | Frequencies below X hz. |

Table 1 describes a group of sensor nodes NODE1001-NODE1010 organized in a Sub-Group 1 of sensor nodes NODE1001, NODE1002, NODE1003, NODE1004, NODE1005, and NODE1006; and a Sub-Group 2 of sensor nodes NODE 1007, NODE1008, NODE1009 and NODE 1010. Sensor nodes NODE 1001-NODE1010 each include two sound sensors and a photocell for measuring illumination. The sensor nodes NODE1001-NODE1010 may be part of a contextually relevant group of sensor nodes determined to be contextually related, and deemed co-located at location LOC1. Sub-group 1 may be formed after allocating sensing tasks as indicated in Table 1 to nodes NODE 1001-NODE1006. Sub-group 2 may be formed after allocating sensing tasks as indicated in Table 1 to nodes NODE 1007-NODE1010. The group containing all of the sensor nodes, NODE1001-NODE1010, may be grouped by performing a contextual similarity measurement based on a common sensing modality, such as sound. Having formed the group, sub-groups 1 and 2 may be formed when allocated with the indicated sensing tasks. Contextual similarity measurements may be continuously performed using the indicated sensing modality for which the contextual similarity task is allocated to provide continuous monitoring of the sensor node members of each sub-group. The sensor nodes in the group in Table 1 may however be a subset of a larger network of sensor nodes where the subset was found to be contextually related, and co-located.

The sensor node network manager may perform continuous or periodic contextual similarity measurements for the sensor nodes in the network to monitor and confirm the membership of the sensor nodes in the group. If a sensor node in the group generates environmental measurements that do not indicate detection of a common event that is detected by the other sensor nodes in the group, the sensor node is removed from the group. Similarly, new nodes may be added to the group by reporting environmental measurements indicating detection of a common event detected by sensor nodes already members of the group. New nodes may be added to increase measurement redundancy. The sensor node network manager may then allocate sensing tasks in a manner that optimizes the distribution of resources for the allocated sensing tasks.

The information in Table 1 for each group and sensor node may include other information. For example, the table may store operation resource limitations such as a latest battery charge for each sensor node, or a predetermined minimum alert level for warning of resource limitations such as battery charge. The table may also store communications parameters, or other information.

The sensor node network manager may request or periodically receive, or receive from time to time, a sensor capability report identifying the capabilities and limitations of each sensor node. In some embodiments, a sensor capability report may be part of a communication transmitting environmental measurements. The sensor capability report from each sensor node may include information identified above, or any other information of interest for each sensor node.

The sensor node network manager may use information in Table 1, or tables like it to perform management tasks. For example, the sensor node network manager may receive a sensor capability report, or an environmental measurement from a sensor node that includes a resource limitation alert. One example of such an alert may be communicated to warn of a low battery charge in a battery on the reporting sensor node. The sensor node network manager may remove the reporting sensor node from whatever group it is in and replace the sensor node with another sensor node that is contextually related to the sensor node and capable of performing the same sensing task. Alternatively, the sensor node having the resource limitation may simply stop sending contextual information applied for the co-location detection. In this case, the sensor node is automatically dropped from the group and task allocation, and the network reorganizes itself with the remaining sensor nodes.

In another example, the sensor node network manager may set and adapt thresholds for the resource limits. The sensor node network manager may temporarily lower a threshold alert level for the specified resource in order to continue to operate. For example, the sensor node network manager may set the battery charge threshold level lower in order to maintain the operation.

It is noted that in forming the groups and sub-groups described above, contextual similarity measurements may be performed in which environmental measurements are communicated as sparse representations using the compressed sensing approach described above. Contextual similarity measurements may be based on cross-correlation determinations between environmental measurements, and may involve receiving environmental measurements as sub-sampled sparse representations and reconstructing sparse events from the sub-sampled sparse representations. The environmental measurements may be processed using a digital Fourier transform before sub-sampling by selecting a reduced set of coefficients. Reconstruction may be performed using numerical optimization, an annihilating filter method.

It is further noted that sensor may using sensing modalities that include:

1. audio,
2. audio at specific frequencies,
3. light illumination,
4. temperature,
5. sound pressure level,
6. acceleration,
7. pH level, and
8. a physical event at a time delay after a previous physical event.

In some embodiments, the contextual similarity is based at least in part on events that are not simultaneous. An event is not necessarily a simultaneous spatial event over the whole network or a subset of nodes. Temporal similarity is detected, for example, by determining the delay that corresponds to the maximum correlation value in similarity metrics. The similarity is hence detected (using, e.g., the correlation method) with delayed values. In embodiments in which contextual similarity may be based on non-simultaneous events, the step of comparing environmental measurements include identifying environmental measurements as including the common event by identifying maximum cross-correlations including a time delay.

If the contextual event is stationary and the nodes are mobile, or the event is mobile and the nodes are stationary, or if all components are in motion, the contextual similarity measure has a temporal component. That is, a similarity is detected with a certain time delay. The relative speed of the network nodes and the source of the contextual event, such as movement of a weather front, can be determined from the delays in similarity calculations.

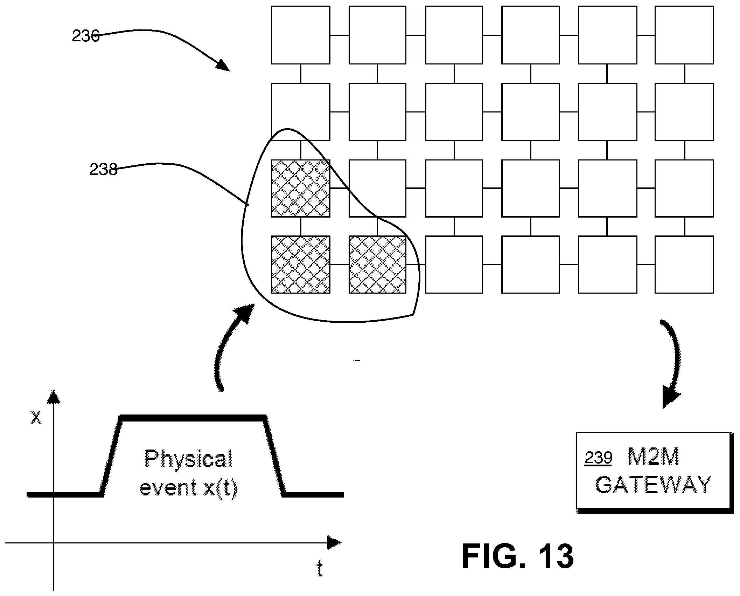

FIG. 13 is a schematic diagram of a sensor node network 236 comprising a group of sensors observing the same physical event within a range of the network 236. The sensor nodes in the network 236 communicate with an M2M Gateway 239. The sensor nodes include multiples sensors using different modalities and are configured to measure physical events in a multimodal context. FIG. 13 illustrates the range of the context of interest (the physical event) may not extend to the entire network. Only the sensor nodes within the range can be classified as relevant nodes and allocated for the sensing task relevant to the physical event.

FIG. 13 shows a group of sensor nodes 238 (marked with cross-hatching) determined to be observing the same context (e.g., the same physical event x(t)) within the range of the network. The group of sensor nodes 238 defines the range of the network 236 that may be allocated for the sensing task relevant to physical event x(t).

The example embodiment in FIG. 13 illustrates that sensors in a network do not need to be identical. A physical event, such as a pattern of sound pressure level change, may appear similar to each sensor regardless of the sampling frequency. Different sensor nodes may be classified in the group of relevant nodes, including grouping of sensor nodes that measure different modalities. A physical event may excite several different modalities. For example, the physical event of opening a door may lead to an emitted sound, a change in pressure level, an acceleration, and even a change in illumination. A normalized sparse event transmitted from the given set of nodes may therefore be independent of sensor modalities.

It is not necessary for every node within the sensor network to have the same sensor capabilities and number of sensors. When all the co-located nodes are allocated to a given context-sensing task, other modalities available in the group of nodes may also be captured. Information about the available capabilities of the relevant network sensor nodes may be stored with other information about the sensor nodes when creating the sensor groups. When the group allocation is done, the gateway or server may request these sensor nodes to monitor one or more additional predetermined modalities. If the overall number of required modalities is greater than the number of relevant nodes, some of the nodes are allocated with more than one sensor modality. For example, it may happen that the network was allocated based on detected sound pressure level events, while more than two additional modalities such as temperature and illumination modalities were requested. If only two nodes are found to be detecting the same sound event, these two nodes are assigned to contribute with more than one sensor simultaneously. The task cannot be shared with any other nodes.

In some embodiments, the co-locating sensor nodes detecting the same context may allocate sensing tasks differently in order to save resources. It may be desirable for each relevant sensor node to be allocated with a minimal set of sensing tasks, *i.e.* a minimal number of modalities, to save battery and transmission bandwidth, or other resources. That is, a minimal number of sensor nodes and sensors are allocated for each measuring task.

The context similarity analysis described above may be performed using one or more sensor node sets. The construction of a network topology with a plurality of overlapping sets can be performed according to the outcome of the similarity analysis. The sensor node network manager organizes the network into subgroups based on events detected in different positions by one or more sensor nodes. Based on the similarity and co-location estimation results, sensor nodes may be classified simultaneously in more than one subgroup. That is, the sensor node network may have plurality of overlapping sub-groups in which case the overall network structure and topology relative each other can be conveniently analyzed. In this case, for example, even if only a limited number of sensor nodes have explicit location information, an accurate topology of the whole network may be determined. It is noted that the unique events detected by different subgroups of the network may consist of one or more different modalities since the context analysis may be conducted with one or more sensor signals simultaneously.

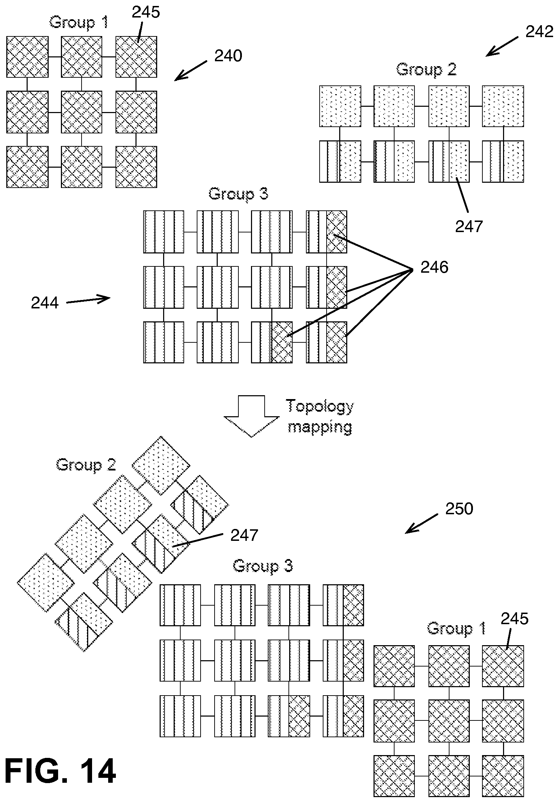

FIG. 14 is a schematic diagram illustrating an example of a grouping of connected sensors based on context similarity and mapping the groups together. FIG. 14 depicts a first sensor node group 240, a second sensor node group 242, and a third sensor node group 244 detecting different contexts identified in FIG. 14 with different types of hatching (cross-hatching, dotted hatching, and vertical hatching, respectively). Sensor nodes in each group that detect more than one context are marked with both types of hatching. For example, sensor nodes 246 in sensor node group 3 detect a vertical hatching context and a cross-hatching context. The detection of more than one context may occur simultaneously, in different time windows or even in different modalities. For example, sensors may be detecting different audio events (audio context) in different frequency ranges.

In some implementations, at least one sensor node in a group may be provided with accurate location information, such as from a GPS (global positioning system) device, or by having a fixed known location established and recorded in the sensor node, *e.g.,* at the time of installation. In implementations having at least one sensor node with a known location, or an anchor sensor node, a group of sensor nodes can be anchored to the absolute geographical location of the anchor sensor node relative to other sensor nodes. In addition, a control node or other sensor node in the network may have *a priori* knowledge about the location of the detected context in some of the groups. For example, the location of the source of a sound may be known. However, an anchor sensor node is not needed in each group. For example, in the diagram in FIG. 14, the first sensor node group 240 includes a first anchor sensor node 245 and the second sensor node group 242 includes a second anchor sensor node 247. Based on the context detection illustrated by the hatching of the sensor nodes in each group resulting from performing contextual similarity measurements, a topology mapping 250 may be generated depicting locations of each group 240, 242, 244 relative to each other. The third sensor node group 244 can be localized with reasonable accuracy on the map of sensor nodes using the location of the anchor sensor nodes 245, 247 without additional knowledge.

According to an example implementation, the anchor sensor node 245 or 247 may act as the initiator of the contextual information analysis. When conducting the context similarity analysis (which operates as a co-location estimation) the data from other nodes is compared to the anchor sensor node 245 or 247. If location information is available, the sensor nodes classified in the same co-locating group with contextual similarity are allocated with the location data of the anchor sensor node 245 or 247. The sensor node network manager may then allocate sensors for a dedicated measurement task based on the location.

With respect to a sensor node group, such as the first group 240 in FIG. 14, including an anchor sensor node 245, the sensor node network manager may receive a location of a sensor node in the group 240. The location may be determined from a GPS reading, for example, or from having been identified during installation and configuration of the sensor node, or from some other suitable source. The sensor node network manager may then store the location of the sensor node in, for example, a database of sensor nodes, such as a database described by Table 1. In an example implementation, the sensor node may be identified as an anchor sensor node. The location of the anchor sensor node may be assigned to other sensor nodes in the contextually related group 240.

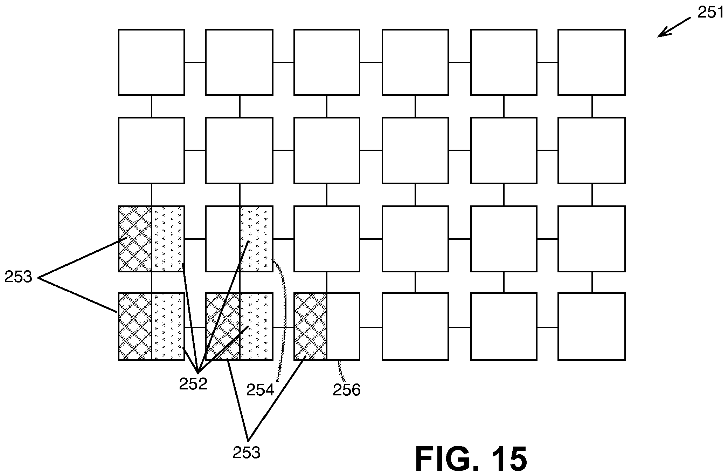

FIG. 15 is a schematic diagram illustrating sensor nodes being added or removed from a sensing task based on a contextual similarity. In FIG. 15, a sensor node network 251 includes a first sensor node group 252 detecting the same context indicated by the dotted shading. The sensor nodes in the first sensor node group 252 are contextually related, or co-located. A second sensor node group 253, indicated by cross-hatching, is allocated a sensing task (as described above with reference to FIG. 12) of capturing physical events having a modality of interest. The example in FIG. 15 illustrates how sensor nodes may be classified in a relevant group when it is determined that those sensor nodes are able to detect the same physical event. The relevant group of sensor nods may then be assigned to sense a signal of interest that may be a completely different modality. If a sensor node detects the same context as the other nodes, it is included in the sensing task for the given modalities either with the same or different sensors. Conversely, if a sensor node cannot detect the same context as the other nodes, it may be dropped from being allocated the sensing task for the given modalities.

As shown in FIG. 15, a first sensor node 254 is part of the first sensor node group 252 that detects the same context. The first sensor node 254 had not been allocated the sensing task of the sensor nodes in the second sensor node group 253. The first sensor node 254 is, however, contextually related to other sensor nodes in the second sensor node group 253. Therefore, the first sensor node 254 may be allocated the sensing task for the given modalities allocated to the other sensor nodes in the second sensor node group 253. A second sensor node 256 is a member of the second sensor node group 253 allocated the sensing task along with the other sensor nodes in the second sensor node group 253. The second sensor node 256 could not detect the physical event of the common context of the first sensor node group 252. The second sensor node 256 may therefore be removed from the second sensor node group 253.

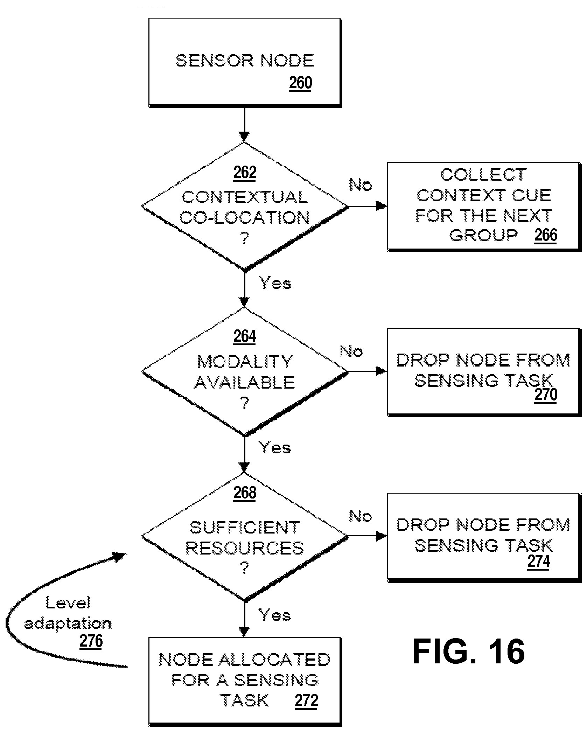

FIG. 16 is a flowchart illustrating an example of a sensor node allocation process based on contextual similarity. As illustrated in FIG. 16, each sensor node may perform a role in the assignment process. A sensor node 260 transmits context data in the form of at least one environmental measurement as well as side information including information about the sensor node and sensor resources of the sensor node 260 to a sensor node network manager as described above. The context data may comprise a data structure format used to transmit sensor signals or environmental measurements, and may be received by the sensor node network manager in a step of receiving environmental measurements. The data transmitted by the sensor node may include location information if available. The sensor node network manager may maintain a database of groups, sub-groups, and sensor nodes as described above with reference to Table 1. At decision block 262, the sensor node network manager conducts contextual similarity detection by comparing the transmitted data with environmental measurements and data related to sensor nodes in the network. If the data does not match with any of the existing groups, or anchor nodes, the node is not included in any of the existing sensing tasks. However, the data is stored at step 266 as contextual information (or a contextual cue) in order to create a new group around the given sensor node. The other sensor nodes may later be compared to these contextual parameters. If the sensor node has accurate location information such as GPS coordinates included in the transmission, the node is allocated as an anchor node within the created group.

In decision block 264, the sensor node network manager checks whether the sensor node 260 has the correct set of sensors, with the correct modalities, available for the given task. For example, if a wireless sensor network is conducting environmental measurements, the task in a given position with sensor detecting, *e.g.,* similar $CO_2$ conditions may drop a sensor node that does not have sensor, *e.g.,* for pH level measurements.

At decision block 268, the sensor node network manager checks that the sensor node 260 has sufficient resources, such as battery level for a long lasting measurement task and enough bandwidth for data transmission. The check at decision block 268 may be of particular use for modalities with high sampling and data rates. If the sensor node 260 has sufficient resources, the sensor node is allocated the sensing task at step 272. Depending on the number of available sensor nodes and the required redundancy for the task, the sensor node network manager may adapt the limits for the resources at 276. The sensor node network manager may also check for a handover request and drops the sensor node 260 from the task in case a handover request is received.

As illustrated in FIG. 16, the sensor node 260 may have a degree of control over the task load. If the sensor node 260 identifies at decision block 268 that the resources are not sufficient for any new task or for the ongoing tasks, or if the captured data for the context similarity analysis is not reliable, the sensor node 260 may stop transmitting the contextual parameters for the co-location estimation process. Alternatively, the sensor node 260 may issue a handover request within the data stream. In this case the node is dropped at step 274 from the sensor groups allocated for the sensing tasks in the next analysis round. In addition, the node may switch off one or more of the individual sensors and hence ease the task load.

Even if the node is dropped from the task, the group allocation may still be maintained. If the sensor node becomes available, such as for example when it has acquired sufficient resources, if the sensor node has remained contextually related to the contextually related sensor node group, and if additional measurement redundancy is required later, the sensor node may be activated and assigned the sensing task at issue.

As noted above, the sensor node network manager may manage and perform steps involved in contextual-similarity measurements executing on any suitable data networked component. In one embodiment, an M2M gateway is configured to operate as the sensor node network manager. In another embodiment, a control node operating as a sensor node that may be connected to a network of sensor nodes may be configured to operate as a sensor node network manager. In addition to one or more sensors and sensor resources, the control node may include a processor and a non-transitory computer-readable medium, with executable instructions being stored on the computer-readable medium. The instructions used by a sensor node network manager to allocate sensing tasks among sensor nodes as well as any of the methods described above. In one embodiment, the instructions may implement logic described by the following pseudo-code:

```
Send context sensing task for all sensor nodes with modality
request and a start time stamp and duration time for the
analysis window;
If (context data received) AND (side info received) {
                If (data contains location info) OR (node ID in
        known location) {
                                Set node as anchor node;
          }
                Context similarity analysis against data
        received from other nodes;
                If (Context similar to context of i:th node) {
                Node ID added to the same group with i:th node
                If (Group has an anchor node with location info)
        {
                Add location info to the node;
                 }
                 }
                 Else {
                Node forms individual group;
                 }
                 If (Node has sensor set required for the task of
        the group) {
                Node included in the group;
                 }
                 Else {
                Node forms individual group;
                 }
                 If (Node has batter charge level > threshold)
        AND
                    (Transmission bandwidth > required data rate)
        AND
                    (No handover request) {
                Node included in the group;
                 }
                 Else {
                Node forms individual group;
                 }
        }
        If (Number of nodes in j:th group > threshold) {
        Send sensing request of selected modality to nodes in j:th
        group;
        }
        Else {
        If (Sensor available) {
        Back to beginning;
        }
        Else {
        Lower battery charge threshold;
```

In another embodiment, a sensor node in a sensor node network may be implemented using a processor and a non-transitory computer-readable medium, with executable instructions being stored on the computer-readable medium. The instructions used by a sensor node may implement logic described by the following pseudo-code:

```
If (context capture request received from server) {
If (Battery level < threshold) OR
        (Context analysis results is not reliable) {
                        Transmit handover request and side info
                (battery charge level, sensor list, node ID);
                        Skip the task
}
        If (Node's sensor set includes the requested modality) {
Collect a data vector with given modality at requested time;
Construct sparse event;
If (Context analysis is not reliable) {
                                Transmit side info
                (battery charge level, sensor list, node ID);
                        Skip the task;
}
Else {
Transmit CS data to M2M gateway and
Side info (battery charge level, sensor list, node ID);
}
}
}
```

In an example embodiment, functions for sensor node grouping, sensor node classification, sensor node group management, allocation and resource management based on contextual similarity such as example embodiments described above may be implemented as a software update for each sensor node and device within a sensor node network. In addition, a sensor node may be upgraded with a new sensor dedicated for a given context analysis. Known transport protocols and signaling mechanisms may be used to support the messages communicated for context analysis and task allocation.

Embodiments of the systems and methods described herein may be implemented in a wireless sensor network consisting of different devices with different capabilities. For example, sensors distributed within a large area, such as within city limits, may share the task of monitoring the air condition, pollution, and pollen density within a sub group of sensors sharing similar conditions. The sensor node network server may automatically allocate a subset of sensors monitoring the environment in different regions. When a phenomenon, such as pollution cloud, moves over the larger area, a different set of sensors can be activated. At the same time, the measurement task within a group is shared and rotated based on the available resources.

In another example, sensors provided in automobiles are used for monitoring of weather and traffic conditions. Such an embodiment may make use of sensors found in state-of-the art automobiles, such as sensors for air temperature, rain, speed and distance to other vehicles. Instead of collecting information about location or ID of individual private vehicles, the central server may classify moving sensors anonymously based on only the given measurements, request a set of relevant co-locating nodes to capture measurement signals and update for example weather forecast and traffic congestion estimates. A cellular or other radio access network connection may provide coarse information about the location as well as speed using cell tower based triangulation. However, the contextual information provides an alternative method for even more accurate mapping. This is beneficial for location-based service development.

Some embodiments may be implemented in a context with stringent power consumption limitations. A network of environmental sensors may be implemented in a remote location with limited possibilities for recharging or connection to a power supply. For example, sensors measuring soil for harvest optimization are expected to operate for years without any recharge possibilities. In this case, the nodes operating in similar contexts may share the sensing task and thereby reduce power consumption.

## III. Self-Organizing Wireless Sensor Networks

Presently disclosed are systems and methods wherein wireless sensor networks self-organize based on contextual similarity.

Sensor nodes in Wireless Sensor Networks (WSN) capture data from the environment with the sensor node's sensing capabilities and broadcast the results over the network to a network application interface or database. In example embodiments, each sensor node captures a local context with a predetermined set of sensors and shares the information with other sensor nodes in the network. Sensor nodes may apply sparse domain measurement signals, or transform the signals within the sparse domain and then utilize compressed sensing as described above with reference to FIGs. 2-7. Environmental measurements in sparse representations provide contextual cues about the environment of the sensor nodes in the WSN.

In example embodiments, the contextual cues generated utilizing sparse domain measurements and compressed sensing are transmitted to other sensor nodes of the network at least within one or two hops away. The sensor nodes may restrict the context cue transmission to only a sub-set of sensor nodes. In an example embodiment, the sensor node first searches for its neighboring nodes using standard neighborhood detection methods, such as, for example, methods according to the Mobile Ad Hoc Network (MANET) Neighborhood Discovery Protocol (NHDP). The sensor node then shares the contextual cues, and requests a similarity analysis with the closest neighbors.

It is noted that the standard methods for searching for neighboring network nodes according to MANET NHDP is based on standard radio connectivity. Wireless connections are established for transmitting information between the network nodes and forwarding messages to the service provider controlling the WSN. A sensor node shares information with the nearest neighbor to save power and minimize radio disturbances.

As used herein, the term "hop" shall refer to the distance between a sensor node and any one of the sensor node's closest neighbors in any direction. The term "hop" does not refer to any specific distance, only whatever distance is between immediately neighboring sensor nodes.

In example embodiments, sensor nodes in a WSN perform contextual similarity measurements relative to each sensor node's neighbors. As sensor nodes determine they are contextually related to neighboring nodes, a contextual similarity field encompasses the contextually related sensor nodes as a group in their respective locations. Depending on what the sensor nodes are assigned to measure, a contextual similarity field may represent or identify a physical phenomenon, event, or occurrence. For example, contextual similarity fields may represent weather phenomena (wind gusts, rain clouds, clouds about to cover solar panel farms), moisture/nutrient on a field, temperature profile in a building, a pollen cloud within city limits, oil leak in a river, gas cloud over the city, etc.

A contextual similarity field may have a significantly larger range than a one or two hop neighborhood of an individual sensor node. In example embodiments, a sensor node connected to another sensor node with a context similarity may forward a context similarity request further in its own neighborhood within one or two hops. The contextual similarity field analysis expands by propagating similarity requests through the ad hoc network in a hop-by-hop manner. The propagation of similarity requests may continue as long as there are sensor nodes detecting a contextual similarity with the originating node. When the detected contextual cues are finally different, the field boundary is reached.

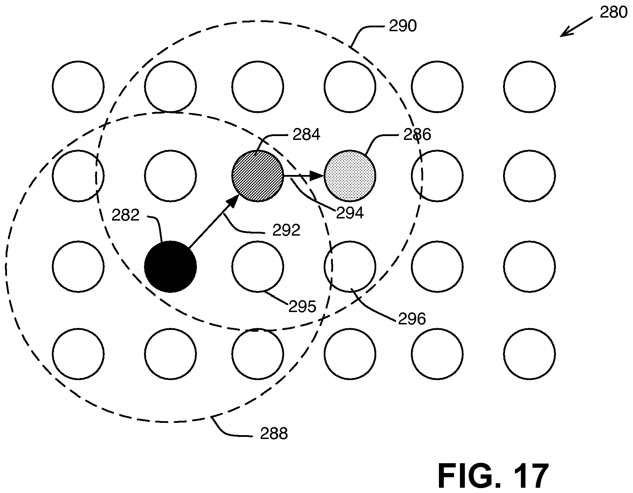

When a sensor node within range of one or two hops receives a contextual cue data and detects the corresponding similarity within its own surrounding context, the process continues by expanding the analysis area yet another one or two hop range. FIG. 17 illustrates a sensor node network 280 in which an initiating sensor node 282 sends a contextual similarity request with context cues to other nodes in the neighborhood within a one-hop range. As shown in FIG. 17, the initiating sensor node 282 sends context cues in a contextual similarity request 292 to a neighboring sensor node 284 one hop away. The neighboring node 284 determines that it is detecting the same context as the initiating sensor node 282, and forwards a contextual similarity request 294 further to other sensor nodes within a one-hop range, such as a next neighboring sensor node 286. In some embodiments, the context similarity request includes the contextual cue of the initiating sensor node 282, a list of all the sensor nodes detecting the context similarity, and the distance in number of hops. The initiating sensor node 282 may send the contextual similarity request 292 to any or each of the sensor nodes within one hop, indicated in FIG. 17 at 288. Similarly, the neighboring sensor node 284 may send the contextual similarity request 294 to any or each of the sensor nodes within its one hop range, indicated at 290. It is noted that the information provided in the context similarity requests may depend on specific implementations. The specification of any set of data or data structure for information contained in context similarity requests is not intended to be limiting.

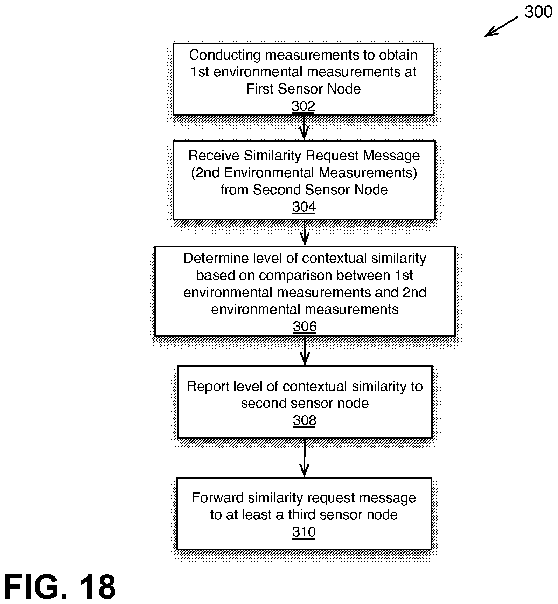

FIG. 18 is a flowchart illustrating operation of a method 300 for obtaining a contextual similarity field in a sensor node network such as the sensor node network 280 in FIG. 17. At step 302, a first sensor node (neighboring sensor node 284 in FIG. 17, for example) conducts sensor measurements to obtain first environmental measurements. At step 304, the first sensor node receives a similarity request message containing second environmental measurements as context cues from a second sensor node (such as, for example, the initiating sensor node 282 in FIG. 17). At step 306, the first sensor node determines a level of contextual similarity based on a comparison between the first environmental measurements (context cues from the first sensor node) and the second environmental measurements (context cues from the second sensor node). At step 308, the level of contextual similarity determined by the first sensors node is reported to the second sensor node. At step 310, the contextual similarity request message is forwarded to at least a third sensor node (such as for example, the next neighboring sensor node 286 in FIG. 17). The third sensor node and other sensor nodes receiving contextual similarity request messages may then perform the method 300 in FIG. 18 resulting in a propagation of contextual similarity request messages through the sensor node network.

Referring to FIG. 17, the initiating sensor node 282 sends the similarity request with a timestamp that may provide an analysis window for the available contextual cues. The receiving sensor node may include a circular buffer or other storage mechanism for storing similar types of contextual cues so that a comparison can be made. Sparse domain processing using a compressed sensing approach results in a straightforward, low complexity calculation of contextual cues. Contextual cues in sparse representation also require a smaller amount of storage space than raw high sampling rate measurement data.

It may be preferred in some embodiments to include contextual cues generated by the initiating sensor node 282 as contextual similarity requests are propagated through the sensor node network 280. The contextual similarity may gradually change hop-by-hop, and contextual similarity over the detected field may not be detected. Forwarding the context of the initiating sensor node 282, and making local comparisons against the context of the initiating sensor node 282, may also reveal a temporal evolution of the contextual field. As the event associated with the contextual field may evolve in space with certain speed, the temporal difference of the context provides additional information. When the contextual similarity measurements are conducted against the contextual cues from the starting point, both spatial and temporal co-location may be detected.

When a sensor node receives context cues and a request to check the corresponding similarity, a reply message is transmitted to the requesting sensor node to forward the reply message back to the initiating sensor node 282. The replay message contains the contextual similarity analysis results. The reply message may contain either a binary (yes/no to contextual similarity) or, for example, a probability cue in the range of [0...1] about the contextual similarity. In some embodiments, the probability cue may provide a strength parameter that may be used to classify the resulting contextual similarity field. The temporal difference in the contextual cues could be reported with a time stamp indicating the timing of the matched cues. In addition, the sensor node may reply with contextual cues based on another modality, or on all modalities available to the sensor node.

A sensor node, such as the neighboring sensor node 284 in FIG. 17, forwards contextual similarity requests even if a contextual similarity is not detected. A sensor node may stop forwarding the contextual similarity requests when the distance in number of hops to the sensor node last detected a contextual similarity exceeds, a threshold or an overshoot hop count. In an example implementation, the overshoot hop count may be four hops. A specific threshold may depend on the specific implementation. The overshoot hop count provides an indication to stop the analysis when the edge of the contextual field is far enough away. This threshold may be implemented by including in the contextual similarity request message the number of hops that have been taken from the initiating sensor node 282 as well as a number of hops that have been taken without detecting a contextual similarity. The context similarity field mapping may thus be stopped when a predetermined number of hops were taken without detecting a contextual similarity to the initiating sensor node 282. If a similarity is detected within the overshoot period, the corresponding hop count is reset to zero.

When a node forwards the request to the next node, it also reports back the previous node about the similarity finding as well as the distance between nodes in number of hops. Hence, the knowledge of the contextual similarity as well as the co-location of the nodes is increasing in both nodes.

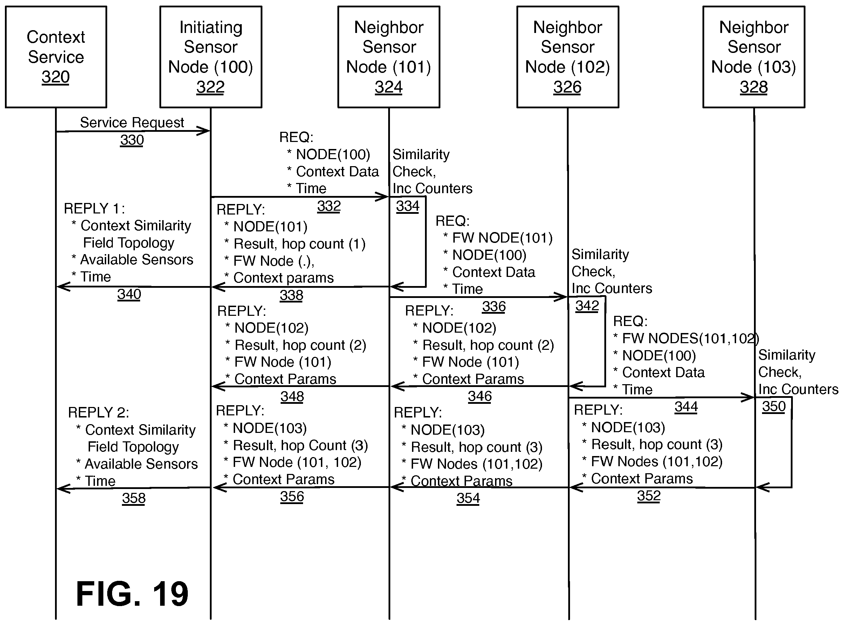

FIG. 19 is a message flow diagram illustrating the communication of contextual similarity requests started by an initiating sensor node 322 and propagated to a third neighboring sensor node 328. The contextual similarity analysis may be started in response to a service request 330 by a context service 320, which may be accessed over a data network available to the sensor nodes. The service request 330 is communicated to the initiating sensor node 322. In an example implementation, the initiating sensor node 322 is selected from the sensor nodes in the network by the context service 320. The initiating sensor node 322 may be designated to operate as the initiating sensor node, or any of the sensor nodes may be selected at any given time depending on the capabilities of the sensor nodes.

The initiating sensor node 322 sends a first contextual similarity request 332 to its neighbor sensor node 324 in response to receiving the service request 330. The contextual similarity request 332 may include a node identifier (100) for the initiating sensor node 322, contextual cue data, and a timestamp. The first neighboring sensor node 324 receives the first contextual similarity request 332 and in response, performs a similarity check 334 between the contextual cue data provided by the initiating sensor node 330 and contextual cues generated by the first neighboring sensor node 324 using one or more of its sensors. The first neighboring sensor node 324 also increments a hop counter by one and sends a second contextual similarity request 336 to a second neighboring sensor node 326.

The first neighboring sensor node 324 also sends a reply message 338 to the initiating sensor node 322 in response to the first contextual similarity request 332. The first neighboring sensor node reply message 338 includes its node identifier (101) as the sensor node that originated the reply message 338, the contextual similarity results, the hop count when the contextual similarity request 332 was received, and a forwarding node list, which is empty since the contextual similarity request 332 was not forwarded to the first neighboring sensor node 324, but rather sent directly from the initiating sensor node 322. The reply message 338 may also include a set of context parameters relating to the first neighboring sensor node 324. Such context parameters may include, for example, modalities used for contextual similarity measures, location information, information relating to sensors on the sensor node, and other information.

The second neighboring sensor node 326 receives the second contextual similarity request 336, which includes the node identifiers of the forwarding nodes, which is only the node identifier (101) of the first neighboring sensor node 324. The second contextual similarity request 336 also includes the node identifier (100) of the initiating sensor node 322, the contextual cue data of the initiating sensor node 322, and a timestamp. The second neighboring sensor node 326 performs a contextual similarity check 342 between the contextual cue data generated by the initiating sensor node 330 and contextual cues generated by the second neighboring sensor node 326 using one or more of its sensors. The second neighboring sensor node 326 also increments the hop counter by one and sends a third contextual similarity request 344 to a third neighboring sensor node 328.

The second neighboring sensor node 326 also sends a reply message 346 to the first neighboring sensor node 324 to relay to the initiating sensor node 322 in response to the second contextual similarity request 336. The reply message 346 is sent to the first neighboring sensor node 324 as the sensor node that sent the contextual similarity request to which the second neighboring sensor node 326 is replying. The second neighboring sensor node reply message 346 includes its node identifier (102) as the sensor node that originated the reply message 346, the contextual similarity results, the hop count when the second contextual similarity request 336 was received, a forwarding node list that includes the node identifier (101) of the first neighboring sensor node 324, and a set of context parameters relating to the second neighboring sensor node 326. The second neighboring sensor node reply message 346 is received by the first neighboring sensor node 324 in accordance with the order of forwarding nodes. The second neighboring sensor node 326 relays the reply message to the initiating sensor node 322 as reply message 348.

The third neighboring sensor node 328 receives the third contextual similarity request 344, which includes the node identifiers of the forwarding nodes, which is the node identifiers (101, 102) of the second neighboring sensor node 326 and the first neighboring sensor node 324. The third contextual similarity request 344 also includes the node identifier (100) of the initiating sensor node 322, the contextual cue data of the initiating sensor node 322, and a timestamp. The third neighboring sensor node 328 performs a contextual similarity check 350 between the contextual cue data generated by the initiating sensor node 330 and contextual cues generated by the third neighboring sensor node 328 using one or more of its sensors. The third neighboring sensor node 328 also increments the hop counter by one.

In the example shown in FIG. 19, the third neighboring sensor node 328 is the last sensor node depicted in the example. The third neighboring sensor node 328 may send a fourth contextual similarity request (not shown). The sensor node network may include more sensor nodes through which contextual similarity requests may continue to propagate. The process may continue until no other sensor nodes are able to receive contextual similarity requests, until a maximum hop count is provided and reached, or until contextual similarities are no longer detected (after a predetermined overshoot hop count).

The third neighboring sensor node 328 also sends a reply message 352 to the second neighboring sensor node 326 to relay to the initiating sensor node 322 in response to the third contextual similarity request 344. The reply message 352 is sent to the second neighboring sensor node 326 as the sensor node that sent the contextual similarity request to which the third neighboring sensor node 328 is replying. The third neighboring sensor node reply message 352 includes its node identifier (103) as the sensor node that originated the reply message 352, the contextual similarity results, the hop count when the third contextual similarity request 344 was received, a forwarding node list that includes the node identifiers (101, 102) of the second neighboring sensor node 326 and the first neighboring sensor node 324, and a set of context parameters relating to the third neighboring sensor node 328. The third neighboring sensor node reply message 352 is received by the second neighboring sensor node 326 in accordance with the order of forwarding nodes. The second neighboring sensor node 328 relays the reply message to the second neighboring sensor node 324 as reply message 354. The second neighboring sensor node 324 relays the reply message to the initiating sensor node 322 as reply message 356.

The initiating sensor node 322 may initiate the flow of contextual similarity request messages shown in FIG. 19 at any or each of its neighboring sensor nodes within a one-hop range. For example, in the sensor node network 280 in FIG. 17, the initiating sensor 282 may communicate contextual similarity requests to the other three sensor nodes in its one-hop range 288.

As the initiating sensor node 322 receives reply messages 338, 348, 356, reply messages may be communicated to the context service 320 to provide the results of the analysis. The initiating sensor node 322 may send a first service reply message 340 after receiving a reply message from its one-hop neighbors, such as first neighboring sensor node 324. The initiating sensor node 322 may also send a second service reply message 358 after the reply message 356 is received, which is a reply from the third neighboring sensor node 328 at the edge of the network shown in FIG. 19. The service reply messages 340 and 358 may include a contextual similarity field topology (or mapping of the contextually related sensor nodes), a list of available sensors in the sensor nodes in the network, and a time stamp. The reply messages 340 and 358 may also include more or less information depending on a protocol established between the control service 320 and the initiating sensor node 322.

The contextual similarity requests may be transmitted within a sensor node network in a one or two hop range. In example embodiments, transport may be arranged so as to improve efficiency by minimizing transmission resource usage. For example, the transform coefficients may be quantized and packetized in, for example, a JSON (JavaScript Object Notation) data structure in a real-time protocol (RTP) payload. The compressed domain transform coefficients are, for example, vector quantized jointly. Hence, all the coefficients are in single vector using standard vector quantization tools. The bit stream may further be entropy-coded for example with Huffman coding. Alternatively, each transform coefficient is scalar quantized and further entropy coded to lower the bit stream size. One computationally light method employed in some embodiments is to packetize the transform coefficients as floating-point numbers in a JSON data structure.

The JSON data structure may also contain the initiating sensor node ID, the sensor node ID of each forwarding sensor node in case the message is forwarded multiple times, the number of hops (the number of times the message was already forwarded), the number of sensor nodes that did not detect similarity, and an indicator of the applied modality and time stamp corresponding to the start or end of the analysis window of the contextual cues. In addition, the contextual similarity request message may contain a request for additional modalities to be analyzed. That is, the sensor node may request another set of contextual cues with one or more additional modalities. An example of a JSON data structure for a contextual similarity request is shown below. The example JSON data structure below contains *italic* text as a placeholder for numeric values. Sensor node IDs, etc., are examples of the values that may be inserted. It may be desired to limit the contextual similarity field range within the sensor node network. A maximum number of hops may also be defined if the interest is in phenomena close to the initiating sensor node.

```
{
        /* mandatory fields */

                "initiating node ID": 1001,
                "forwarding node ID": [ 1002, 1010, 1100 ],
                "number of hops": 4,
                "number of hops without similarity": 0,
                "starttime in initiating node": timestamp,
                "contextual coefficients": [ coeff #1, coeff#2, ..... , coeff#N ],

        /* optional fields */

                "search range":
```

**Example of JSON formatted Request 1**

In an exemplary embodiment, the reply to the contextual similarity request message may be implemented as another JSON data structure containing the result of the contextual similarity analysis. In some embodiments, the result of the contextual similarity analysis may be provided as a probability value in the range of [0...1] based, for example, on correlation results. In other embodiments, the result of the contextual similarity analysis is simply a binary true/false flag resulting from comparing the correlation to a predetermined threshold. A timestamp corresponding to the matching set of contextual cues may be included to indicate a temporal shift or evolution of the contextual field. In addition, the reply message contains the sensor node ID, the list of nodes that forwarded the request all the way to the given node, the nearest neighbors the node has and possibly a set of contextual cues with one or more additional modalities, and corresponding sensor IDs.

```
{
    /* mandatory fields */

        "replying node ID":
2001,
        "forwarding node ID": [
1002, 1010, 1100, …, 2000 ],
        "nearest neighbor ID":
[2001, …. 2005],
        "similarity probability":
0.75,
        "number of hops": 12,
        "number of hops
without similarity": 0,
        "starttime": timestamp,
        "time difference": time
difference in milli seconds,

    /* optional fields */

        "available sensor
modalities": [sensor ID#1, sensor ID#2,
…],
        "alternative contextual
coefficients":
        [
            {

"starttime": timestamp,
                "sensor
ID": sensor ID#1,
```

**Example of JSON formatted Request 2**

When a sensor node receives a context similarity analysis request from a neighboring node, the sensor node checks the ID of the initiating sensor node. The receiving sensor node ignores the request if it has already received a request from the same sensor node from another sensor node. This prevents redundant transmissions over the network. If the repeated contextual similarity request from the same initiating sensor node has a shorter route (which may be detected if the hop count from the initiating node is lower than the earlier request) the sensor node may repeat the reply message again with lower distance information. The initiating sensor node would then receive more accurate distance information (measured in number of hops).

The contextual similarity field analysis and transmission of contextual similarity request messages, i.e. transmission of request tokens, may be performed using techniques analogous to those of a breadh-first search (BFS) in graph theory. As in a BFS, the contextual similarity search propagates from the initiating sensor node to all the neighboring nodes. One difference from BFS is that, in example embodiments, the contextual similarity request is forwarded simultaneously to all neighboring nodes. A receiving sensor node may receive multiple contextual similarity requests, which each sensor node handles independently. The sensor node keeps track of each contextual similarity request within a predetermined time frame. If a sensor node receives a contextual similarity request to which it has already provided a reply message, the later contextual similarity request is ignored. As a result, the overall search is propagating through the network via unique paths without redundant searches or reply messages.

In some embodiments, techniques such as depth-first search (DFS) may be implemented although an analysis may proceed with lower efficiency.

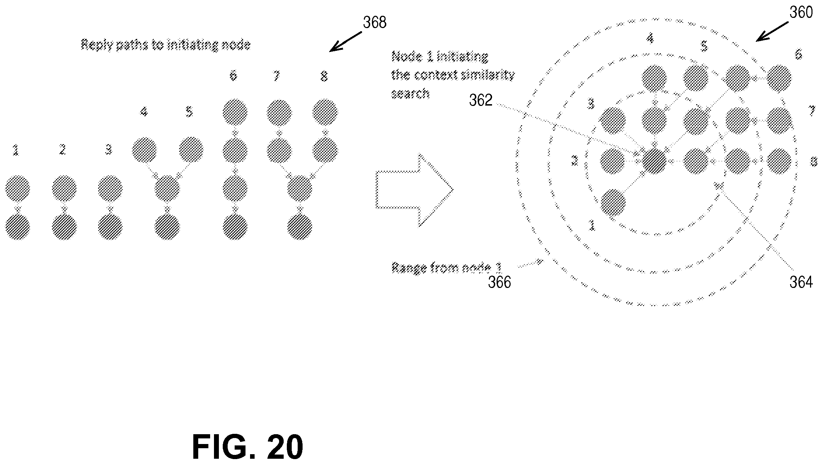

FIG. 20 illustrates the process of propagating contextual similarity requests through a sensor node network 360 to construct a network topology for the contextually co-located sensor nodes based on reply paths. It is noted that the contextual similarity analysis is not limited to sensor node networks having a regular sensor topology (such as, the rectangular grid of FIG. 20). The contextual similarity analysis may be performed on irregular (e.g. randomly distributed) sensor node network topologies. The examples of systems and methods disclosed herein may be employed using wireless sensor nodes that are capable of moving or being moved freely and independently.

The example in FIG. 20 depicts the sensor node network 360 in which an initiating sensor node 362 has initiated a contextual similarity analysis by sending a contextual similarity request to a neighboring sensor node 364. The sensor node network 360 is depicted in state in which the contextual similarity requests have been propagated through the sensor nodes in the sensor node network 360. The arrows from each sensor node pointing back to the initiating sensor node 362 indicate reply messages being communicated on a hop-by-hop basis back to the initiating sensor 362. The hops traversed by the reply messages define a reply path from the sensor node that originated the communication of a reply message. FIG. 20 illustrates a set of reply paths 368 for the reply messages generated by each sensor node in the sensor node network 360.

In the example illustrated in FIG. 20, eight different paths consisting of one, two or three hops have been detected. For example, sensor nodes 2 and 3 have one-hop reply paths, Sensor nodes 4 and 5 have two hop reply paths, and sensor nodes 6, 7, and 8 have three hop reply paths. The initiating sensor node 362 receives reply messages from the minimum distance paths from each sensor node and uses the information contained in the reply messages to construct a sensor node network topology or map.

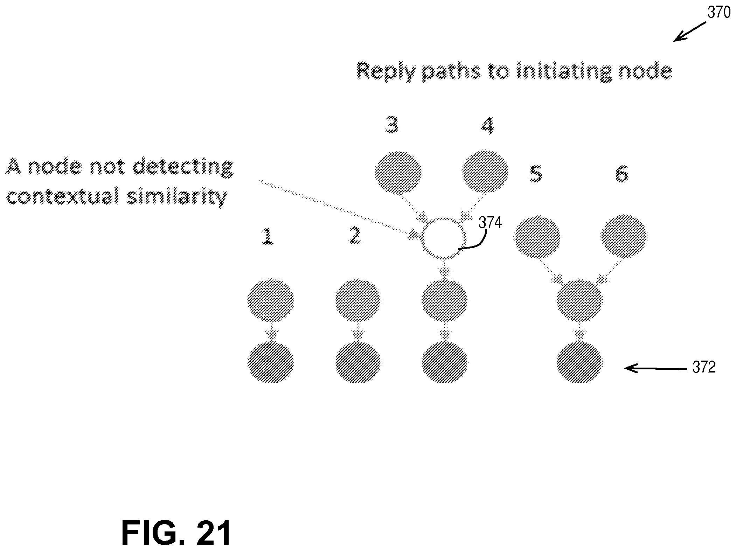

A reply path from a contextually related node may include sensor nodes that did not detect similar contextual cues themselves. This indicates that the contextual similarity field has gaps, *i.e.* it contains empty "islands." FIG. 21 illustrates six reply paths 370 to an initiating sensor node 372 that includes a reply path having a sensor node 374 that did not detect contextual similarity in the analysis. The corresponding sensor node 374 continued sending requests within a one hop range.

FIG. 21 illustrates an example of six reply paths 370 from six different sensor nodes. A unique path is created from each sensor node receiving contextual similarity requests. Different reply paths may have sensor nodes in common. Common sensor nodes may be used to analyze the contextual similarity field as they provide information about the overall network topology. For example, in FIG. 21, the sensor nodes at the end of reply paths 3 and 4, and the sensor nodes at the end of reply paths 5 and 6 are likely to be in close proximity to each other since they share a portion of the reply path.

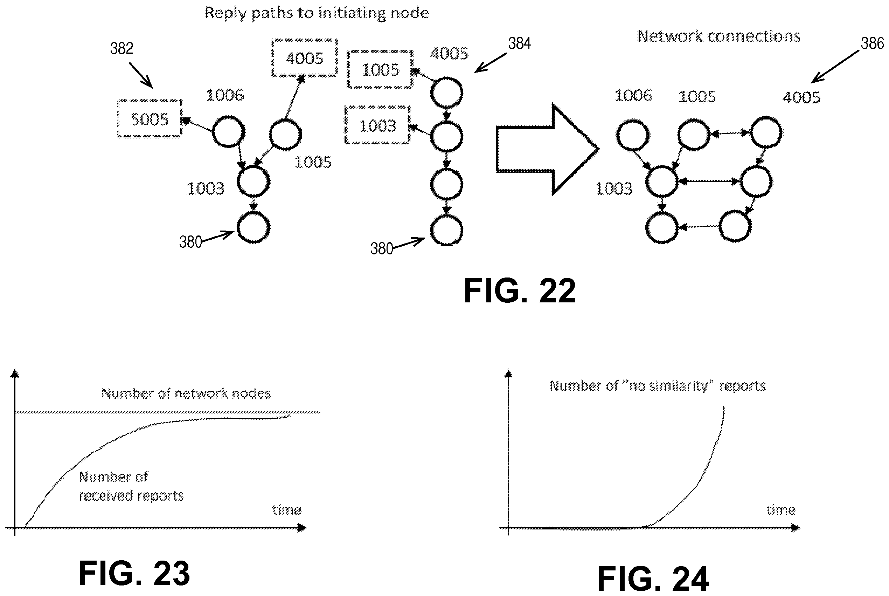

In constructing a network topology from a contextual similarity analysis, information in different reply messages may be assimilated. The initiating sensor node receives reply messages each containing a list of forwarding nodes indicating the chain of sensor nodes that have performed contextual similarity measurements and forwarded requests to the sensor node that generated the reply message. The forwarding node list provides an indication of the reply path of the reply message. The initiating sensor node receives individual reply paths, many of which may have sensor nodes in common. The initiating sensor node may assimilate information from the different reply paths to determine a topology of the contextually related sensor nodes. For example, the initiating sensor node receives a reply message from sensor node 5 in FIG. 21 along a reply path that includes sensor node 2. The initiating sensor also receives a reply message from sensor node 6 in FIG. 21 along a reply path that also includes sensor node 2. The information from the reply paths for sensor node 3 and sensor node 4 may be assimilated allowing the initiating sensor node to view the reply paths as combined for sensor nodes 5 and 6 as shown in FIG. 21. As the initiating sensor node receives reply messages, common paths may be detected and used to continuously update the network topology of the network. For example, FIG. 22 illustrates two unique reply paths to the initiating sensor node constructed using the reply messages the initiating node is receiving (as described with reference to FIG. 19). When the reply message contains information about the closest neighbors, the reply paths can be connected together. In the end, the whole topology of the network can be constructed. For example, referring to FIG. 22, an initiating sensor node 380 receives reply messages along a first reply path 382 and along a second reply path 384. The initiating sensor node 380 may determine that reply paths 382 and 384 have sensor nodes in common. The reply paths 380 and 382 may be re-configured showing network connections to the common sensor nodes to generate a network topology 386.

As described above, the contextual similarity field for a given sensor node network continuously evolves with new incoming reply messages. The network topology 386 is also iterated whenever a new reply message arrives at the initiating sensor node 380. Each unique reply path keeps getting longer, new reply paths are attached to the network topology 386, and the overall picture of the network and the contextual similarity field becomes more elaborate. The initiating sensor node has a continuously up-to-date map of the sensor node network. The initiating sensor node may therefore report the status of the sensor node network at any time.

If the number of sensor nodes in the network is not known, there is no absolutely correct threshold or time limit after which the initiating sensor node could safely conclude that the contextual similarity analysis is complete and the entire sensor node network was covered. Several methods may be used to conclude the analysis and obtain a picture of the contextual similarity field in the sensor node network range.

In one example, when the number of nodes of the sensor node network is known, a breadth-first search (BFS) -based approach for a contextual similarity field search is complete when a reply message from each known sensor node is received. That is, the search is complete when the number of reply messages is equal to the number of sensor nodes. FIG. 23 is a graph schematically illustrating the number of received reply messages as a function of time. When the distance from the initiating sensor node increases within a large sensor node network, the reply messages take more time to arrive. The time difference between incoming reply messages is also increasing. Therefore, the number of reply messages asymptotically approaches the number of sensor nodes.

If the number of sensor nodes is not known, and if the sensor node network includes a very large number of sensor nodes, the initiating sensor node does not have any fixed threshold for the number of reply messages. In such embodiments, the analysis may be considered complete when the search has propagated long enough. The initiating sensor node may have set a maximum range for the search by defining a maximum number hops the request is forwarded.

The initiating sensor node may set up an overshoot period for the consecutive incoming reply messages. When the curve in FIG. 23 is sufficiently flat (*e.g.,* the rate of incoming reply messages falls below a threshold), the contextual similarity field analysis is considered complete and final results may be reported to a context server. The overshoot period may be determined based on the overall transmission capabilities of the network.

In some embodiments, when the incoming reply messages contain only a "no similarity" result for a predetermined time period, the contextual similarity field analysis is considered complete. If the contextual similarity field under investigation has finite limits, the number of reply messages reporting "no similarity" increases over time, as illustrated in the schematic graph of FIG. 24.

A contextual similarity field analysis begun by an initiating sensor node may extend in all directions around the initiating sensor node. As the analysis is propagated, sensor nodes may receive contextual similarity requests from more than one sensor node. For example, the next neighboring sensor node 286 in FIG. 17 receives a contextual similarity request 294 from the first neighboring sensor node 284. The next neighboring sensor node 286 may also receive a contextual similarity request from sensor node 296 based on a contextual similarity request received from sensor node 295, which is a one-hop neighbor of the initiating sensor node 282. When the next neighboring sensor node 286 receives the contextual similarity request from sensor node 296, the next neighboring sensor node 286 may determine from the forwarding nodes list that the number of hops back to the initiating sensor node 282 is greater than the number of hops associated with the contextual similarity message 294 received from the neighboring sensor node 284. The next neighboring sensor node 286 need only provide a single contextual similarity determination. The next neighboring sensor node 286 only needs to generate a reply message to one of the two contextual similarity requests. In this example, the next neighboring sensor node 286 may choose to generate a reply message to the contextual similarity request received from neighboring sensor node 284 because the reply path for that request is shorter than the reply path for the request from sensor node 296.

In exemplary embodiments, the forwarding nodes list in the reply message to an initiating sensor node may be used to analyze the sensor node network size. For example, when the initiating sensor node has received a reply message from every sensor node that was listed as the neighboring node, the whole network is covered. At that point, every accessible sensor node was covered and the contextual similarity field search is considered complete.

The search results improve with each incoming message. Each new incoming reply message adds new information from locations progressively further away from the initiating sensor node. Reply messages add yet another layer on top of earlier results. The overall picture of the contextual similarity field analysis is a step-by-step expansion in each direction. The analysis may therefore be concluded by a context server such as the context service 320 (in FIG. 19). The context server may analyze the results provided by the initiating node at certain time instances. When the context server concludes that the analyzed contextual similarity field is covered and/or the edges of the field are visible in the overall map, the analysis may be stopped.

## IV. Sensor Node Fault Detection And Contextual Validation

A sensor network and a machine-to-machine (M2M) service consisting of connected devices monitoring the environment may comprise sensor nodes having a predefined set of two or more sensors. In example embodiments, a sensor node is capturing at least one primary and one secondary modality in the same location with other sensor nodes. Sensor nodes in the same environment capture the same content, and therefore, detect the same events. Information relating to simultaneous events detected by sensors applying identical modalities can be used to determine the simultaneous operation, co-location and the existence of shared content.

In example embodiments, the secondary modality is captured with a set of robust and reliable secondary sensors. The secondary sensors may be used primarily for co-location estimation using example implementations of co-location estimation described above. When a set of sensor nodes is classified as co-located sensor nodes based on the secondary sensor reading, the corresponding primary sensor data can be analyzed and compared in a similar manner using the contextual co-location estimation. When primary sensors are also classified as co-located, *i.e.* detecting the same events, they are considered to be working correctly. Any deviation compared to secondary classification reveals sensor reliability issues and possible sensor faults.

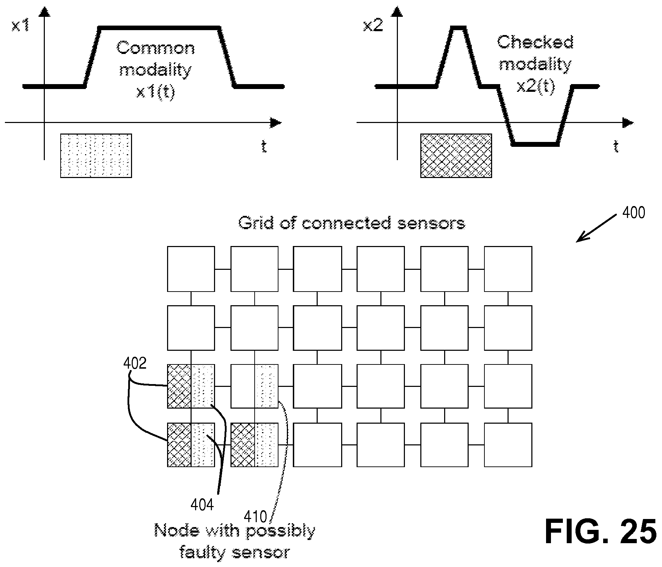

As illustrated in FIG. 25, a sensor node network 400 includes a first subset of four contextually related sensor nodes 404 (marked with dotted regions). As such, the contextually related sensor nodes 404 are able to monitor a common modality event $x_1(t)$ using secondary sensors on the sensor nodes 404. The four contextually related sensor nodes 404 are expected to be able to detect a second event $x_2(t)$ with primary sensors. The example in FIG. 25 shows only three sensor nodes 402 (marked with cross-hatching) of the four contextually related sensor nodes 404 are able to detect the event $x_2(t)$. The sensor node 410 that does not detect the event $x_2(t)$ is deemed likely to have a faulty sensor.

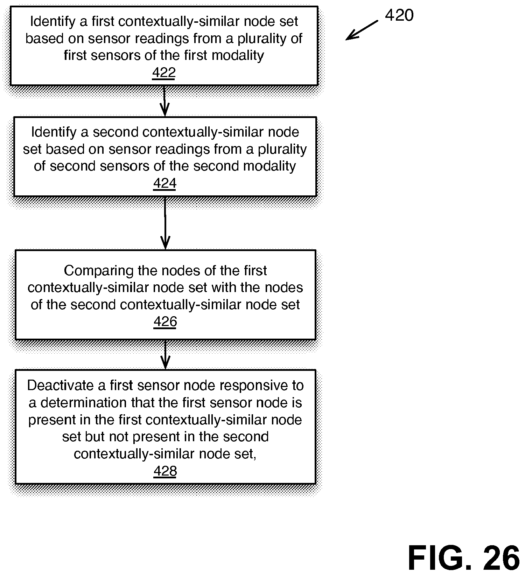

FIG. 26 is a flowchart illustrating operation of an example of a method 420 for detecting a faulty sensor node in a sensor node network. The method 420 in FIG. 26 may be performed for a sensor node network, such as the sensor node network 400 in FIG. 25, which comprises sensor nodes having at least a first sensor of a first modality and a second sensor of a second modality. At step 422, a first conceptually similar node set based on sensor readings from a plurality of first sensors of the first modality is identified. The identification in step 422 may be performed by determining if the plurality of first sensors of the first modality detected a common event, such as event $x_1(t)$ in FIG. 25. An example of a first conceptually similar node set is the conceptually related sensor nodes 402 shown in FIG. 25. At step 424, a second conceptually similar node set based on sensor readings from a plurality of second sensors of the second modality is identified. The identification in step 424 may be performed by determining if the plurality of second sensors of the second modality detected a different common event, such as event $x_2(t)$ in FIG. 25. An example of a second conceptually-similar node set is the three sensor nodes 404 that detected the second physical event $x_2(t)$ shown in FIG. 25. At step 426, the sensor nodes in the first conceptually similar node set is compared with the sensor nodes in the second conceptually similar node set. At step 428, a first sensor node (such as sensor node 410 in FIG. 25) is deactivated if the first sensor node is present in the first conceptually similar node set, but is not present in the second conceptually-similar node set. The first sensor node is deemed faulty. In one example embodiment, an alert regarding a potential fault condition of the first sensor node is generated responsive to a determination that a first sensor node is present in the first contextually similar node set but not present in the second contextually similar node set.

It is noted that the identification steps 422 and 424 in the method 420 in FIG. 26 may be performed using the sparse sensing approach described above with reference to FIGs. 2-10 to determine detection of a common event. As described above, the computational burden in processing and comparing sub-sampled sparse domain events may be placed on a sensor node network manager that may be operating on a server, M2M gateway, or other component with substantial computing resources.

The contextual similarity estimation with a secondary modality may also be used to align the sensor node internal timing when comparing the temporal difference of the detected contextual events. The set of co-located sensor nodes is requested to monitor the primary modality, and hence, to check the condition of the corresponding sensors. When the primary modalities are also co-located, the corresponding sensors are considered valid and reliable. Nodes that are not co-located with the others may be determined to have a sensor fault.

In one example embodiment, a sensor node network includes a plurality of sensor nodes, each of the sensor nodes having at least a coarse sensor, a fine sensor, a processor, and a non-transitory storage medium. The storage medium stores instructions that, when executed on the processor, are operative to perform the method comprising: (i) operating the sensor nodes to obtain respective coarse environmental measurements from the coarse sensors and respective fine environmental measurements from the fine sensors; (ii) based on the coarse environmental measurements, identifying a first group of sensor nodes detecting a first common context; (iii) based on the fine environmental measurements, identifying a second group of sensor nodes detecting a second common context; (iv) determining whether there is a substantial overlap between the first group and the second group; (v) in response to a determination that there is substantial overlap between the first group and second group, determining whether there is any sensor node in the first group that is not in the second group; and (vi) in response to a determination that there is a sensor node in the first group that is not in the second group, flagging that sensor node as potentially being faulty.

According to a further embodiment, a sensor node network consists of sensor nodes having one or more special dedicated common context sensors for checking the co-location. These common context sensors may be selected for their robustness and reliability in order to provide correct co-location detection. The dedicated common context sensor is first used to select the relevant group of sensor nodes after which the high complexity, high sensitivity, high sampling rate primary sensors of the relevant group are used. In some embodiments, the temporal difference analysis of the contextual event is further applied for synchronization of the internal clock of the sensor node.

The validity of the high sensitivity primary sensors is then checked with a similar compressed sensing method. In this case, only a limited set of data coefficients are used for representing the content and detected event. The method may also be applied for refined synchronization of the sensor nodes.

The common context detection and grouping of sensor nodes may also be realized with the same sensor modality as the actual sensing task and the sensor validation. In this case the common context analysis is conducted using, for example, band-pass filtered, down sampled and limited dynamic range signal from the actual high sensitivity sensor. A reduced dynamic signal is more robust with reduced measurement noise and may be treated as if it were a signal from a separate low-end sensor.

The time alignment and synchronization information is available in co-location check of secondary sensor signal from robust sensors. This information is used to align the primary signals with higher sampling rates and high data rates. The alignment enables shorter analysis windows, which lowers data storage computational requirements. In addition, any remaining temporal mismatch after the alignment reveals possible sensor fault.

The phased sensor validation approach of this disclosure is also suitable for monitoring the effects of any process control activity. First, the process control action (input signal) is measured with at least one sensor. The sensor nodes that are able to detect the corresponding activity (input) are grouped with given the common context method. The actual response of the control action (process output) is then monitored with at least one additional sensor within the selected sensor node group.

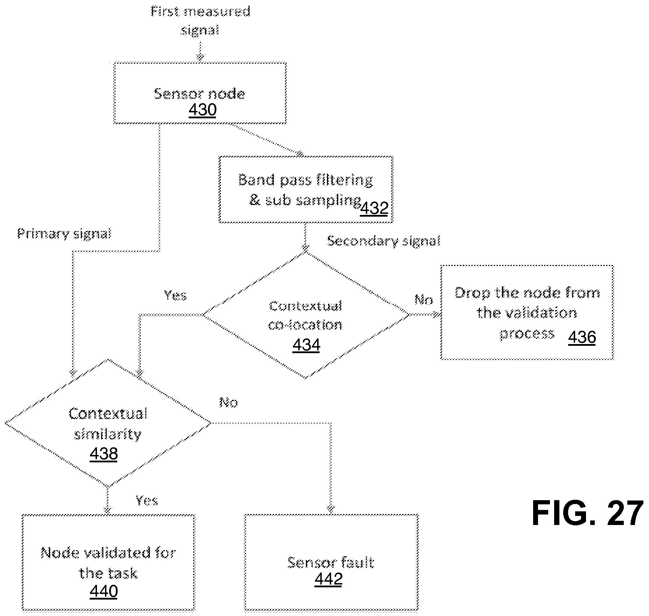

FIG. 27 illustrates an embodiment that can be implemented when the sensor node only has a high sensitivity sensor with high sampling rate. In order to check whether a single node of a sensor network is in working order and does not for example introduce high measurement noise, the following analysis can be conducted.

The measurement signal is first captured with the sensor 430. The signal is forwarded first to the band pass filtering and subsampling to reduce the dynamics of the signal and also suppress the measurement noise of the sensor in step 432. The signal is more robust when the possible high frequency noise as well as fine structure of the signal is filtered out in 432. The process in step 432 also reduces the complexity of the contextual co-location estimation of the sensor nodes in decision block 434. Comparing the detected contextual events against the results from the other sensor nodes in decision block 434 enables the sensor network to classify relevant nodes in the same sub group. At this point the nodes not detecting the same event are discarded at step 436.

When a sensor node is classified as member of the sub-group in decision block 434, the high sampling rate, unprocessed sensor signal generated by the sensor node 430 is applied for contextual similarity analysis in decision block 438. At this point, the analysis may also consist of contextual similarity analysis as well as signal noise level comparison against other nodes within the same group. Although the analysis is more complex the overall complexity of the sensor node validation is reduced since the high sampling rate analysis in decision block 438 is conducted on a sub-set of sensor nodes of the network.

If decision block 438 reveals contextual similarity among the nodes of the sub-group the sensor nodes are classified as valid for the actual sensing task at step 440. If one or more of the sensor nodes do not match with the others, the corresponding nodes are classified as faulty at step 442.

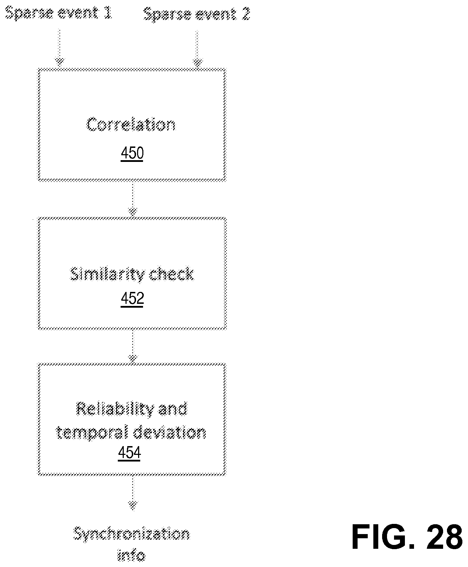

FIG. 28 illustrates a method of extracting the synchronization information. The same process may be used for the first level co-location estimation as well as validation of the high-end sensors. The compressed domain signals are first reconstructed, after which the sparse events to be compared are forwarded to a correlation search algorithm at step 450. The output of the correlation is an estimate of the reliability, based on normalized cross-correlation as well as the delay that represents the maximum correlation value. At step 452, the level of normalized correlation may have a predefined threshold that provides the decision of valid sensor. The delay, on the other hand, represents the temporal deviation and possible mismatch of the sensor node compared to other nodes. The delay may then be applied for synchronizing the high-end sensor output signal. If the correlation is below a predefined threshold, there is no need to synchronize the sensor since it is classified as non-valid for the task or faulty.

The synchronization information is extracted at step 454 when the contextual similarity and co-location of sensor nodes are analyzed using the secondary sensor signal. The contextual similarity check provides two results: 1) the overall similarity and 2) the time alignment mismatch of the sensor readings. The timing mismatch may have two causes: 1) the sensors have misaligned internal clocks or 2) the detected events are moving in the environment.

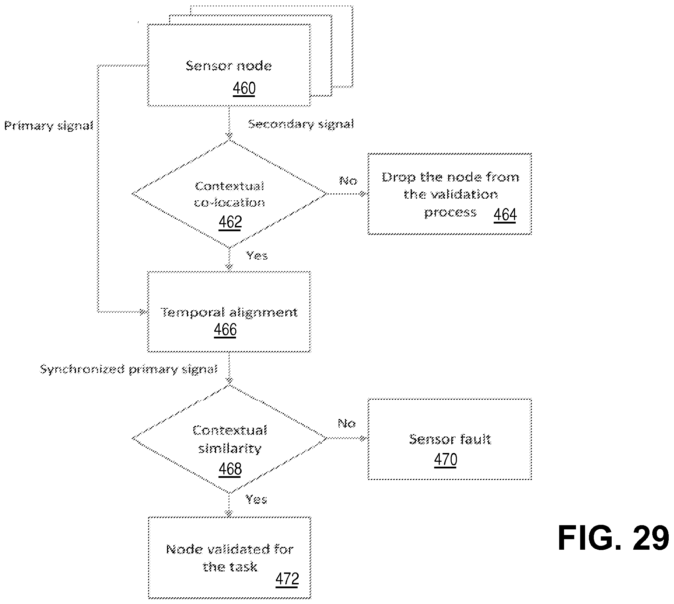

FIG. 29 illustrates a temporal alignment process. Sensor nodes 460 are first grouped based on the contextual co-location performed at decision block 462. At this point, the secondary sensors or secondary sensor signals are used to detect primary signals. Sensors that are not matching with the group are discarded from further analysis at step 464. The outcome of the similarity analysis at decision block 462 is the temporal alignment information. This information is used to align the high sampling rate and high data rate primary sensor signals from generated by sensor nodes 460 at step 466. Temporal alignment may result in improvement of the similarity analysis of the primary signals. For example, when signals are aligned, the analysis windows can be significantly shorter, saving both data storage and computational resources in the context similarity analysis at decision block 468. Furthermore, after the synchronization at step 466, any misaligned signals do not cause errors in the analysis. It should also be noted that misalignment of primary and secondary signals is also a possible symptom of sensor fault. Therefore, any misalignment or low correlation at the analysis decision block 468 causes the sensor to be classified as faulty at step 470. If the signals are considered sufficiently similar, the sensors are validated at step 472.

Example embodiments may be implemented without sparse sensor signals and compressed sampling approach. The context similarity analysis, and the co-location of the sensor nodes can be conducted without sparse representation and compressed sampling in small-scale networks. The efficiency may be sacrificed and the use of the grouping and task allocation in large networks may be prevented, especially with limited data transmission capabilities. The same applies for sensor validation when verifying the actual measurements of the primary modalities. Using, for example, a PCA method is possible, but requires far more data, as well as a training process for each operation point.

The presented methods can be built on top of existing transport and signaling mechanisms. There is no need to build any new requirements on network compatibility or protocols.

## V. Sensor and Control Node Architecture.

Methods described herein may be performed by modules that carry out (i.e., perform, execute, and the like) various functions that are described herein. As used in this disclosure, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

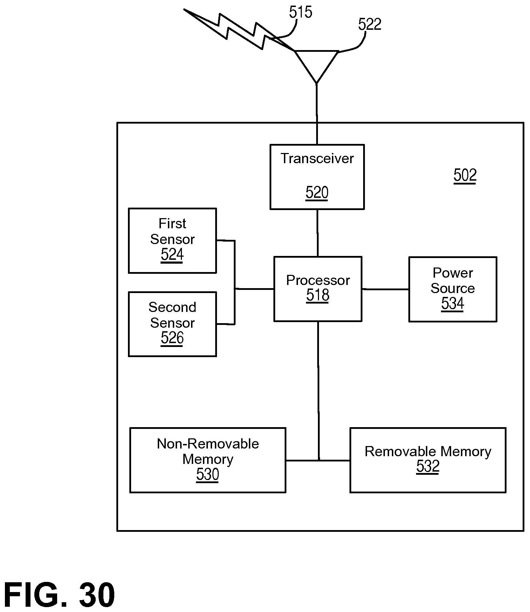

In some embodiments, the sensor nodes and control sensor nodes described herein may be implemented in a wireless transmit receive unit (WTRU), such as WTRU 502 illustrated in FIG. 30. As shown in FIG. 30, the WTRU 502 may include a processor 518, a transceiver 520, a transmit/receive element 522, first sensor 524, a second sensor 526, a non-removable memory 530, a removable memory 532, and a power source 534. It will be appreciated that the WTRU 502 may include any sub-combination of the foregoing elements while remaining consistent with an embodiment. The WTRU 502 may communicate with other sensor nodes or with other data network components such as, but not limited to, servers, gateways (such as M2M gateway), a base transceiver station (BTS), a Node-B, a site controller, an access point (AP), a home node-B, an evolved home node-B (eNodeB), a home evolved node-B (HeNB), a home evolved node-B gateway, and proxy nodes, among others.

The processor 518 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 518 may perform signal coding, data processing, power control, input/output processing, and/or any other functionality that enables the WTRU 502 to operate in a wireless environment. The processor 518 may be coupled to the transceiver 520, which may be coupled to the transmit/receive element 522. While FIG. 30 depicts the processor 518 and the transceiver 520 as separate components, it will be appreciated that the processor 518 and the transceiver 520 may be integrated together in an electronic package or chip.

The transmit/receive element 522 may be configured to transmit signals to, or receive signals from, a node over the air interface 515. For example, in one embodiment, the transmit/receive element 522 may be an antenna configured to transmit and/or receive RF signals. In another embodiment, the transmit/receive element 522 may be an emitter/detector configured to transmit and/or receive IR, UV, or visible light signals, as examples. In yet another embodiment, the transmit/receive element 522 may be configured to transmit and receive both RF and light signals. It will be appreciated that the transmit/receive element 1222 may be configured to transmit and/or receive any combination of wireless signals.

In addition, although the transmit/receive element 522 is depicted in FIG. 30 as a single element, the WTRU 502 may include any number of transmit/receive elements 522. More specifically, the WTRU 502 may employ MIMO technology. Thus, in one embodiment, the WTRU 502 may include two or more transmit/receive elements 522 (e.g., multiple antennas) for transmitting and receiving wireless signals over the air interface 515.

The transceiver 520 may be configured to modulate the signals that are to be transmitted by the transmit/receive element 522 and to demodulate the signals that are received by the transmit/receive element 522. As noted above, the WTRU 502 may have multi-mode capabilities. Thus, the transceiver 520 may include multiple transceivers for enabling the WTRU 502 to communicate via multiple RATs, such as UTRA and IEEE 802.11, as examples.

The processor 518 may access information from, and store data in, any type of suitable memory, such as the non-removable memory 530 and/or the removable memory 532. The non-removable memory 530 may include random-access memory (RAM), read-only memory (ROM), a hard disk, or any other type of memory storage device. The removable memory 1232 may include a subscriber identity module (SIM) card, a memory stick, a secure digital (SD) memory card, and the like. In other embodiments, the processor 518 may access information from, and store data in, memory that is not physically located on the WTRU 502, such as on a server or a home computer (not shown). The non-removable memory 530 or the removable memory 532 may store instructions that when executed, perform functions to generating sparse representations of sensor signals as described above with reference to FIGs. 2-7. If the WTRU 502 is a control node operating as a sensor node network manager as described above with reference to FIG. 1A, the memory 530, 532 may store instructions that when executed perform functions related to reconstructing sparse time domain events and performing environmental measurement comparisons as described above with reference to FIGs. 7-10.

The processor 518 may receive power from the power source 534, and may be configured to distribute and/or control the power to the other components in the WTRU 502. The power source 534 may be any suitable device for powering the WTRU 502. As examples, the power source 534 may include one or more dry cell batteries (e.g., nickelcadmium (NiCd), nickel-zinc (NiZn), nickel metal hydride (NiMH), lithium-ion (Li-ion), and the like), solar cells, fuel cells, and the like.

The processor 518 may also be coupled to a first sensor 524 and a second sensor 526. The example WRTU 502 in FIG. 30 includes two sensors, however, at least one sensor may be included. The two sensors 524, 526 may be sensors of any type capable of sensing in any modality. For example, the two sensors 524, 526 may be any of a:

sound sensor (microphones)

light sensor (photocells)

temperature sensor

accelerometer

pH level sensor

sound pressure

strain gauge

$CO_2$ sensor

smoke detector

moisture sensor

It is noted that the above list is not intended as limiting the type of sensors that may be used in sensor nodes described herein.

Sensors may be provided with corresponding functions for processing signals generated by the sensors. For example, signal processing functions may be performed to filter audio from a microphone to detect sounds in a particular frequency range. In another example, sensors may be provided with analog to digital converters and either analog or digital filters to process the sensor signals.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1.  A method comprising:

    receiving (110) a first environmental measurement from a first sensor node, the first environmental measurement being provided in a representation indicating a start and stop time of at least one event;
    receiving (112) a second environmental measurement from a second sensor node, the second environmental measurement being provided in a representation indicating a start and stop time of at least one event;
    comparing (114) the first environmental measurement with the second environmental measurement to determine (212) whether the first and second environmental measurements signal detection of a common event, wherein comparing the first environmental measurement to the second environmental measurement includes determining a cross-correlation (210) between the first environmental measurement and the second environmental measurement; and
    identifying (116, 118) a location of the first sensor node relative to the second sensor node based on a determination from the comparison that the first and second environmental measurements detected the common event.

2.  The method of claim 1, further comprising sending (119), to the first sensor node, information identifying the location of the first sensor node.

3.  The method of claim 1, wherein the first and second environmental measurements have a measurement modality selected from the group consisting of: a measurement of sound, a measurement of light level, and a measurement of acceleration.

4.  The method of claim 1, wherein the first environmental measurement has a first measurement modality and the second environmental measurement has a second measurement modality different from the first measurement modality.

5.  The method of claim 1, wherein comparing (114) the first environmental measurement to the second environmental measurement includes:

    determining, for the second environmental measurement, a plurality of cross-correlation values with the first environmental measurement and
    selecting a maximum cross-correlation value from among the determined cross-correlation values.

6.  The method of claim 1, further comprising reconstructing at least one of the environmental measurements from the corresponding start and stop times.

7.  The method of claim 6 wherein the reconstruction is performed using numerical optimization.

8.  The method of claim 6 wherein the reconstruction is performed using an annihilating filter method.

9.  The method of claim 1, where the second sensor node is assigned to a sensor node group, the method further comprising:
    assigning the first sensor node to the sensor node group based on the detection of the common event by the first and second sensor nodes.

10. A sensor node network management system (104) comprising:

    a communication interface (520) for communicating with a plurality of sensor nodes; and
    a processor (518) and non-transitory computer-readable medium (530) storing instructions that, when executed on the processor, are operative to perform functions including:

    receiving (222) a plurality of environmental measurements generated by a respective plurality of sensor nodes including first and second environmental measurements generated by respective first and second sensor nodes, each comprising at least a first sensor using a first sensing modality and a second sensor using a second sensing modality;
    comparing (224) the plurality of environmental measurements to identify environmental measurements that include detection of a common event;

identifying a location of the first sensor node relative to the second sensor node based on a determination from the comparison that the first and second environment measurements detected the common event;

assigning (225) the sensor nodes that generated environmental measurements that include detection of the common event to a contextually related group; and

assigning (226) a sensing task based on a first sensing modality to a first plurality of the sensor nodes in the contextually related group and a sensing task based on a second sensing modality to a second plurality of sensor nodes in the contextually related group such that each of the sensor nodes is assigned to perform no more than one sensing modality.

11. The sensor node network management system of claim 10, where the system operates on a control sensor node, the sensor node network management system further comprising:

at least one control node sensor (524, 526) operative to generate a control node time-domain environmental measurement;

where the instructions stored in the non-transitory memory (530) are operative to perform functions including:

comparing the first environmental measurement or the second environmental measurement with the control node time domain environmental measurement to determine whether the first or second environmental measurements and the control node time domain environmental measurement signal detection of a common event; and

determining that the control node sensor is contextually related to the first or second sensor node based on a determination from the comparison that the first or second environment measurements and the control node environmental measurement detected the common event.

12. The sensor node network management system of claim 10 where the non-transitory computer-readable medium stores instructions that, when executed on the processor, are operative to perform functions including:

generating a group table associating an identifier for the contextually related group and a sensor node identifier for each sensor node assigned to the contextually related group, the group table further identifying each of the at least first and second sensors operating on each sensor node.

13. The sensor node network management system of claim 12 where the non-transitory computer-readable medium stores instructions that, when executed on the processor, are operative to perform functions including:

receiving with the plurality of environmental measurements, information relating to sensor capabilities of the respective sensor nodes, the sensor capabilities comprising at least a sensor modality; and

indicating the sensor capabilities in the group table for each sensor node in the contextually related group.

**Patentansprüche**

1. Verfahren, Folgendes umfassend:

Empfangen (110) einer ersten Umweltmessung von einem ersten Sensorknoten, wobei die erste Umweltmessung in einer Darstellung bereitgestellt wird, die eine Beginn- und eine Endzeit mindestens eines Ereignisses angibt;

Empfangen (112) einer zweiten Umweltmessung von einem zweiten Sensorknoten, wobei die zweite Umweltmessung in einer Darstellung bereitgestellt wird, die eine Beginn- und eine Endzeit mindestens eines Ereignisses angibt;

Vergleichen (114) der ersten Umweltmessung mit der zweiten Umweltmessung, um zu bestimmen (212), ob die erste und zweite Umweltmessung eine Erfassung eines gemeinsamen Ereignisses signalisieren, wobei das Vergleichen der ersten Umweltmessung mit der zweiten Umweltmessung umfasst, eine Kreuzkorrelation (210) zwischen der ersten Umweltmessung und der zweiten Umweltmessung zu bestimmen; und

Identifizieren (116, 118) eines Standorts des ersten Sensorknotens in Bezug auf den zweiten Sensorknoten auf Grundlage einer Bestimmung aus dem Vergleich, dass die erste und zweite Umweltmessung das gemeinsame Ereignis erfassten.

2. Verfahren nach Anspruch 1, darüber hinaus umfassend, an den ersten Sensorknoten Informationen zu schicken (119), die den Standort des ersten Sensorknotens identifizieren.

**3.** Verfahren nach Anspruch 1, wobei die erste und zweite Umweltmessung eine Messmodalität haben, die aus der Gruppe ausgewählt ist, die besteht aus: einer Schallmessung, einer Lichtstärkenmessung und einer Beschleunigungsmessung.

**4.** Verfahren nach Anspruch 1, wobei die erste Umweltmessung eine erste Messmodalität hat, und die zweite Umweltmessung eine zweite Messmodalität hat, die sich von der ersten Messmodalität unterscheidet.

**5.** Verfahren nach Anspruch 1, wobei das Vergleichen (114) der ersten Umweltmessung mit der zweiten Umweltmessung umfasst:

für die zweite Umweltmessung mehrere Kreuzkorrelationswerte mit der ersten Umweltmessung zu bestimmen, und
einen maximalen Kreuzkorrelationswert aus den bestimmten Kreuzkorrelationswerten auszuwählen.

**6.** Verfahren nach Anspruch 1, darüber hinaus umfassend, mindestens eine der Umweltmessungen aus den entsprechenden Beginn- und Endzeiten zu rekonstruieren.

**7.** Verfahren nach Anspruch 6, wobei die Rekonstruktion anhand numerischer Optimierung erfolgt.

**8.** Verfahren nach Anspruch 6, wobei die Rekonstruktion anhand eines Annihilationsfilterverfahrens erfolgt.

**9.** Verfahren nach Anspruch 1, wobei der zweite Sensorknoten einer Sensorknotengruppe zugeteilt wird, wobei das Verfahren darüber hinaus umfasst:
den ersten Sensorknoten der Sensorknotengruppe auf Grundlage der Erfassung des gemeinsamen Ereignisses durch den ersten und zweiten Sensorknoten zuzuteilen.

**10.** Sensorknotennetzwerkverwaltungssystem (104), Folgendes umfassend:

eine Kommunikationsschnittstelle (520), um mit mehreren Sensorknoten zu kommunizieren; und
einen Prozessor (518) und einen nicht flüchtigen computerlesbaren Datenträger (530), der Instruktionen gespeichert hat, die bei Ausführung auf dem Prozessor funktionsfähig sind, um Funktionen durchzuführen, die beinhalten:

Empfangen (222) mehrerer Umweltmessungen, die durch jeweilige mehrere Sensorknoten generiert sind, darunter eine erste und zweite Umweltmessung, die durch einen jeweiligen ersten und zweiten Sensorknoten generiert sind, wovon jeder zumindest einen ersten Sensor, der sich einer ersten Abfühlmodalität bedient, und einen zweiten Sensor umfasst, der sich einer zweiten Abfühlmodalität bedient;
Vergleichen (224) der mehreren Umweltmessungen, um Umweltmessungen zu identifizieren, die eine Erfassung eines gemeinsamen Ereignisses beinhalten;
Identifizieren eines Standorts des ersten Sensorknotens in Bezug auf den zweiten Sensorknoten auf Grundlage einer Bestimmung aus dem Vergleich, dass die erste und zweite Umweltmessung das gemeinsame Ereignis erfassten;
Zuteilen (225) des Sensorknotens, der Umweltmessungen generierte, die eine Erfassung des gemeinsamen Ereignisses beinhalten, zu einer kontextuell in Beziehung stehenden Gruppe; und
Zuteilen (226) einer Abfühlaufgabe auf Grundlage einer ersten Abfühlmodalität zu ersten mehreren Sensorknoten in der kontextuell in Beziehung stehenden Gruppe und einer Abfühlaufgabe auf Grundlage einer zweiten Abfühlmodalität zu zweiten mehreren Sensorknoten in der kontextuell in Beziehung stehenden Gruppe, und zwar so, dass jedem Sensorknoten die Durchführung von nicht mehr als einer Abfühlmodalität zugeteilt ist.

**11.** Sensorknotennetzwerkverwaltungssystem nach Anspruch 10, wobei das System als Steuersensorknoten arbeitet, wobei das Sensorknotennetzwerkverwaltungssystem darüber hinaus umfasst:

mindestens einen Steuerknotensensor (524, 526), der funktionsfähig ist, eine Steuerknotenzeitbereichsumweltmessung zu generieren;
wobei die in dem nicht flüchtigen Speicher (530) gespeicherten Instruktionen funktionsfähig sind, Funktionen durchzuführen, die beinhalten:

35

die erste Umweltmessung oder die zweite Umweltmessung mit der Steuerknotenzeitbereichsumweltmessung zu vergleichen, um zu bestimmen, ob die erste oder zweite Umweltmessung und die Steuerknotenzeitbereichsumweltmessung eine Erfassung eines gemeinsamen Ereignisses signalisieren; und
auf Grundlage einer Bestimmung aus dem Vergleich, dass die erste oder zweite Umweltmessung und die Steuerknotenzeitbereichsumweltmessung das gemeinsame Ereignis erfassten, zu bestimmen, dass der Steuerknotensensor kontextuell mit dem ersten oder zweiten Sensorknoten in Beziehung steht.

**12.** Sensorknotennetzwerkverwaltungssystem nach Anspruch 10, wobei der nichtflüchtige computerlesbare Datenträger Instruktionen gespeichert hat, die bei Ausführung auf dem Prozessor funktionsfähig sind, Funktionen durchzuführen, die beinhalten:

eine Gruppentabelle zu generieren, die eine Kennung für die kontextuell in Beziehung stehende Gruppe und eine Sensorknotenkennung für jeden der kontextuell in Beziehung stehenden Gruppe zugeteilten Sensorknoten in Beziehung setzt, wobei die Gruppentabelle darüber hinaus jeden mindestens einen ersten und zweiten Sensor identifiziert, die in jedem Sensorknoten arbeiten.

**13.** Sensorknotennetzwerkverwaltungssystem nach Anspruch 12, wobei der nichtflüchtige computerlesbare Datenträger Instruktionen gespeichert hat, die bei Ausführung auf dem Prozessor funktionsfähig sind, Funktionen durchzuführen, die beinhalten:

mit den mehreren Umweltmessungen Informationen bezüglich Sensorfähigkeiten der jeweiligen Sensorknoten zu empfangen, wobei die Sensorfähigkeiten zumindest einer Sensormodalität umfassen; und
die Sensorfähigkeiten in der Gruppentabelle für jeden Sensorknoten in der kontextuell in Beziehung stehenden Gruppe anzugeben.

## Revendications

**1.** Procédé comprenant :

la réception (110) d'une première mesure environnementale depuis un premier noeud de capteurs, la première mesure environnementale étant fournie dans une représentation indiquant un temps de départ et d'arrêt d'au moins un événement ;
la réception (112) d'une deuxième mesure environnementale depuis un deuxième noeud de capteurs, la deuxième mesure environnementale étant fournie dans une représentation indiquant un temps de départ et d'arrêt d'au moins un événement ;
la comparaison (114) de la première mesure environnementale avec la deuxième mesure environnementale pour déterminer (212) si les première et deuxième mesures environnementales signalent la détection d'un événement commun, sachant que la comparaison de la première mesure environnementale avec la deuxième mesure environnementale inclut la détermination d'une corrélation croisée (210) entre la première mesure environnementale et la deuxième mesure environnementale ; et
l'identification (116, 118) d'un emplacement du premier noeud de capteurs par rapport au deuxième noeud de capteurs sur la base d'une détermination à partir de la comparaison que les première et deuxième mesures environnementales ont détecté l'événement commun.

**2.** Le procédé de la revendication 1, comprenant en outre l'envoi (119), au premier noeud de capteurs, d'informations identifiant l'emplacement du premier noeud de capteurs.

**3.** Le procédé de la revendication 1, sachant que les première et deuxième mesures environnementales ont une modalité de mesure sélectionnée dans le groupe constitué par : une mesure de son, une mesure de niveau de lumière, et une mesure d'accélération.

**4.** Le procédé de la revendication 1, sachant que la première mesure environnementale a une première modalité de mesure et la deuxième mesure environnementale a une deuxième modalité de mesure différente de la première modalité de mesure.

**5.** Le procédé de la revendication 1, sachant que la comparaison (114) de la première mesure environnementale avec la deuxième mesure environnementale comprend :

la détermination, pour la deuxième mesure environnementale, d'une pluralité de valeurs de corrélation croisée avec la première mesure environnementale et

la sélection d'une valeur de corrélation croisée maximale parmi les valeurs de corrélation croisée déterminées.

6. Le procédé de la revendication 1, comprenant en outre la reconstitution d'au moins une des mesures environnementales à partir des temps de départ et d'arrêt correspondants.

7. Le procédé de la revendication 6, sachant que la reconstitution est effectuée par optimisation numérique.

8. Le procédé de la revendication 6, sachant que la reconstitution est effectuée moyennant un procédé de filtrage suppresseur.

9. Le procédé de la revendication 1, sachant que le deuxième noeud de capteurs est assigné à un groupe de noeuds de capteurs, le procédé comprenant en outre :
l'assignation du premier noeud de capteurs au groupe de noeuds de capteurs sur la base de la détection de l'événement commun par les premier et deuxième noeuds de capteurs.

10. Système de gestion de réseau de noeuds de capteurs (104) comprenant :

une interface de communication (520) pour la communication avec une pluralité de noeuds de capteurs ; et
un processeur (518) et un support non transitoire lisible par ordinateur (530) stockant des instructions qui, lorsqu'elles sont exécutées sur le processeur, sont opérationnelles pour effectuer des fonctions incluant :

la réception (222) d'une pluralité de mesures environnementales générées par une pluralité respective de noeuds de capteurs incluant des première et deuxième mesures environnementales générées par des premier et deuxième noeuds de capteurs, chacun comprenant au moins un premier capteur utilisant une première modalité de détection et un deuxième capteur utilisant une deuxième modalité de détection ;
la comparaison (224) de la pluralité de mesures environnementales pour identifier des mesures environnementales qui incluent la détection d'un événement commun ;
l'identification d'un emplacement du premier noeud de capteurs par rapport au deuxième noeud de capteurs sur la base d'une détermination, à partir de la comparaison, que les première et deuxième mesures environnementales ont détecté l'événement commun ;
l'assignation (225) des noeuds de capteurs qui ont généré des mesures environnementales qui incluent la détection de l'événement commun à un groupe contextuellement associé ; et

l'assignation (226) d'une tâche de détection sur la base d'une première modalité de détection à une première pluralité des noeuds de capteurs dans le groupe contextuellement associé et d'une tâche de détection sur la base d'une deuxième modalité de détection à une deuxième pluralité de noeuds de capteurs dans le groupe contextuellement associé de telle sorte que chacun des noeuds de capteurs soit assigné à effectuer pas plus d'une modalité de détection.

11. Le système de gestion de réseau de noeuds de capteurs de la revendication 10, sachant que le système fonctionne sur un noeud de capteurs de commande, le système de gestion de réseau de noeuds de capteurs comprenant en outre :

au moins un capteur de noeuds de commande (524, 526) opérationnel pour générer une mesure environnementale de domaine de temps de noeud de commande ;
sachant que les instructions stockées dans la mémoire non transitoire (530) sont opérationnelles pour effectuer des fonctions incluant :

la comparaison de la première mesure environnementale ou de la deuxième mesure environnementale avec la mesure environnementale de domaine de temps de noeud de commande pour déterminer si la première ou deuxième mesure environnementale et la mesure environnementale de domaine de temps de noeud de commande signalent la détection d'un événement commun ; et
la détermination que le capteur de noeud de commande est contextuellement associé au premier ou au deuxième noeud de capteurs sur la base d'une détermination, à partir de la comparaison, que la première ou deuxième mesure environnementale et la mesure environnementale de noeud de commande ont détecté l'événement commun.

**12.** Le système de gestion de réseau de noeuds de capteurs de la revendication 10, sachant que le support non transitoire lisible par ordinateur stocke des instructions qui, lorsqu'elles sont exécutées sur le processeur, sont opérationnelles pour effectuer des fonctions incluant :

la génération d'un tableau de groupe associant un identifiant pour le groupe contextuellement associé et un identifiant de noeud de capteurs pour chaque noeud de capteurs assigné au groupe contextuellement associé, le tableau de groupe identifiant en outre chacun des au moins premier et deuxième capteurs fonctionnant sur chaque noeud de capteurs.

**13.** Le système de gestion de réseau de noeuds de capteurs de la revendication 12, sachant que le support non transitoire lisible par ordinateur stocke des instructions qui, lorsqu'elles sont exécutées sur le processeur, sont opérationnelles pour effectuer des fonctions incluant :

la réception, avec la pluralité de mesures environnementales, d'informations relatives à des capacités de capteur des noeuds de capteurs respectifs, les capacités de capteur comprenant au moins une modalité de capteur ; et l'indication des capacités de capteur dans le tableau de groupe pour chaque noeud de capteurs dans le groupe contextuellement associé.

FIG. 1A

Co-Location Measurement 108

Receive 1st Environmental Measurement from first sensor node 110

Receive 2nd Environmental Measurement from second sensor node 112

1st and 2nd environmental measurements indicate detection of common event? 114

Yes → First and second sensor node are co-located 116 → Send Location info to 1st sensor node 119

No → First and second sensor node are not co-located 118

FIG. 1B

FIG. 2

FIG. 3

FIG. 4

EP 3 189 310 B1

**FIG. 5**

Compressed
Domain
Transform
Matrix

144  142  146

148

Sampling

Compressed
domain  150

**FIG. 6**

154

SPARSE
RECONSTRUCTION

Transmission

152

156

Sparse
event x(t)

x

t

**FIG. 7**

Network

SPARSE
RECONSTRUCTION

Checked
node

Reconstructed
sparse events

SIMILARITY
MEASUREMENT

Similarity
check

EP 3 189 310 B1

Sensor signal

↓

Threshold adaptation → **HIGH-PASS FILTERING & THRESHOLD** <u>160</u>

↓

**COMPLEX DOMAIN TRANSFORMATION** <u>162</u>

↓

**SPARSE SAMPLING** <u>164</u>

↓

**QUANTIZATION, PACKETIZATION, TRANSPORT** <u>166</u>

↓

Sparse parameterization

**FIG. 8**

Sparse parameters

↓

**GENERATION OF TOEPLITZ MATRIX** <u>200</u>

↓

**ANNIHILATION FILTER ITERATION** <u>201</u>

↓

**COEFFICIENT AMPLITUDES** <u>202</u>

↓

Sparse time domain event

**FIG. 9**

EP 3 189 310 B1

Sparse
event 1

Sparse
event 2

CORRELATION 210

SIMILARITY CHECK 212

Similarity measure

**FIG. 10**

**Fig. 11**

FIG. 12

Physical event x(t)

239  M2M GATEWAY

FIG. 13

EP 3 189 310 B1

Group 1

245

240

242

Group 2

247

Group 3

244

246

Topology
mapping

Group 2

247

250

Group 3

Group 1

245

# FIG. 14

FIG. 15

SENSOR NODE
260

262
CONTEXTUAL
CO-LOCATION
?

No → COLLECT CONTEXT CUE FOR THE NEXT GROUP 266

Yes

264
MODALITY
AVAILABLE
?

No → DROP NODE FROM SENSING TASK 270

Yes

268
SUFFICIENT
RESOURCES
?

No → DROP NODE FROM SENSING TASK 274

Yes

Level adaptation 276

NODE ALLOCATED FOR A SENSING TASK 272

FIG. 16

**FIG. 17**

EP 3 189 310 B1

300

Conducting measurements to obtain
1st environmental measurements at
First Sensor Node
302

Receive Similarity Request Message
(2nd Environmental Measurements)
from Second Sensor Node
304

Determine level of contextual similarity
based on comparison between 1st
environmental measurements and 2nd
environmental measurements
306

Report level of contextual similarity to
second sensor node
308

Forward similarity request message
to at least a third sensor node
310

FIG. 18

EP 3 189 310 B1

Context Service **320**

Initiating Sensor Node (100) **322**

Neighbor Sensor Node (101) **324**

Neighbor Sensor Node (102) **326**

Neighbor Sensor Node (103) **328**

Service Request
**330**

REQ:
 * NODE(100)
 * Context Data
 * Time
**332**

Similarity Check, Inc Counters
**334**

REPLY 1:
 * Context Similarity Field Topology
 * Available Sensors
 * Time

REPLY:
 * NODE(101)
 * Result, hop count (1)
 * FW Node (.),
 * Context params

REQ:
 * FW NODE(101)
 * NODE(100)
 * Context Data
 * Time

Similarity Check, Inc Counters
**342**

**340**

**338**

REPLY:
 * NODE(102)
 * Result, hop count (2)
 * FW Node (101)
 * Context Params
**348**

REPLY:
 * NODE(102)
 * Result, hop count (2)
 * FW Node (101)
 * Context Params
**346**

**336**

REQ:
 * FW NODES(101,102)
 * NODE(100)
 * Context Data
 * Time

Similarity Check, Inc Counters
**350**

REPLY 2:
 * Context Similarity Field Topology
 * Available Sensors
 * Time

REPLY:
 * NODE(103)
 * Result, hop Count (3)
 * FW Node (101, 102)
 * Context Params

REPLY:
 * NODE(103)
 * Result, hop count (3)
 * FW Nodes (101,102)
 * Context Params

REPLY:
 * NODE(103)
 * Result, hop count (3)
 * FW Nodes (101,102)
 * Context Params
**344**

**358**

**356**

**354**

**352**

**FIG. 19**

Reply paths to initiating node

1  2  3  4  5  6  7  8

Node 1 initiating the context similarity search

Range from node 1

FIG. 20

370

Reply paths to initiating node

3     4

A node not detecting
contextual similarity        5     6

374

1     2

372

**FIG. 21**

Reply paths to initiating node

Network connections

## FIG. 22

Number of network nodes

Number of received reports

time

## FIG. 23

Number of "no similarity" reports

time

## FIG. 24

FIG. 25

Identify a first contextually-similar node set
based on sensor readings from a plurality of
first sensors of the first modality
422

Identify a second contextually-similar node
set based on sensor readings from a plurality
of second sensors of the second modality
424

Comparing the nodes of the first
contextually-similar node set with the nodes
of the second contextually-similar node set
426

Deactivate a first sensor node responsive to
a determination that the first sensor node is
present in the first contextually-similar node
set but not present in the second
contextually-similar node set,
428

420

**FIG. 26**

First measured
signal

Sensor node
430

Band pass filtering
& sub sampling 432

Primary signal

Secondary signal

Yes

Contextual
co-location
434

No

Drop the node from
the validation
process   436

Contextual
similarity
438

No

Yes

Node validated for
the task
440

Sensor fault
442

**FIG. 27**

Sparse event 1    Sparse event 2

Correlation

450

Similarity check

452

Reliability and
temporal deviation

454

Synchronization
info

**FIG. 28**

FIG. 29

Sensor node
460

Primary signal

Secondary signal

Contextual
co-location
462

No → Drop the node from
the validation
process    464

Yes

Temporal alignment
466

Synchronized primary signal

Contextual
similarity
468

No → Sensor fault
470

Yes

Node validated for
the task
472

**FIG. 30**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62045986 A
- US 62111745 A
- US 62152510 A
- US 62152318 A

### Non-patent literature cited in the description

- **CANDÈS, EMMANUEL J. ; WAKIN, MICHAEL B.** An Introduction To Compressive Sampling, A sensing/sampling paradigm that goes against the common knowledge in data acquisition. *IEEE Signal Processing Magazine,* March 2008
- **BLU, THIERRY ; DRAGOTTI, PIER-LUIGI ; VETTERLI, MARTIN ; MARZILIANO, PINA ; COULOT, LIONEL.** Sparse Sampling of Signal Innovations, Theory, algorithms, and performance bounds. *IEEE Signal Processing Magazine,* March 2008
- **LEE et al.** A Light-weight and Scalable Localization Technique Using Mobile Acoustic Source. *PROCEEDINGS OF THE SIXTH IEEE INTERNATIONAL CONFERENCE ON COMPUTER AND INFORMATION TECHNOLOGY (CIT '06),* 2006, 235-240
- **KUSHWAHA et al.** Sensor Node Localization Using Mobile Acoustic Beacons. *MOBILE ADHOC AND SENSOR SYSTEMS CONFERENCE,* 07 November 2005, 483-491
- **KHALID ; MUHAMMAD et al.** Gunshot Detection and Localization Using Sensor Networks. *PROCEEDINGS OF THE IEEE INTERNATIONAL CONFERENCE ON SMART INSTRUMENTATION, MEASUREMENT AND APPLICATIONS (ICSIMA),* 26 November 2013, 1-6